# EUROPEAN PATENT APPLICATION

(11) **EP 4 694 336 A1**
(43) Date of publication of application: **11.02.2026**
(21) Application number: 24791773.5
(22) Date of filing: 12.03.2024
(51) Int. Cl.: H04W 36/00

(54) **COMMUNICATION METHOD AND APPARATUS**

(30) Priority: 17.04.2023 CN 202310452792
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN)
(74) Representative: Pfenning, Meinig & Partner mbB
(86) International application number: PCT/CN2024/081254
(87) International publication number: WO 2024/217185

(57) **Abstract**

A communication method and apparatus are provided. The method includes: A central unit sends first indication information to a distributed unit, where the first indication information indicates the distributed unit to establish a radio bearer corresponding to a session associated with a first slice, and/or indicates the distributed unit to suspend the session. The first cell is incapable of providing a terminal device with a service corresponding to the first slice, the first cell is a cell managed by the central unit, and is within a registration area of the terminal device, the first slice belongs to a first slice set, and the first slice set includes a slice allowed within all or a part of areas in the registration area for usage and/or a slice rejected within a part of areas in the registration area for usage. According to the method, the central unit may indicate the distributed unit to establish the radio bearer corresponding to the session associated with the first slice and/or suspend the session, instead of releasing the session, so that frequent release and/or establishment of the session associated with the first slice can be avoided.

## Description

### CROSS-REFERENCE TO RELATED APPLICATIONS

This application claims priority to Chinese Patent Application No. 202310452792.5, filed with the China National Intellectual Property Administration on April 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of mobile communication technologies, various new services and application scenarios continuously emerge, and requirements of these services on network functions, connectivity, security, and the like are greatly different. If a single network is used to bear these services, it is difficult to meet requirements on high bandwidth, low latency, high reliability, and the like at the same time. If a new network is built for each type of service, costs are greatly increased. In this way, a communication network is required to be flexible and scalable to meet different service requirements. Therefore, in a 5th generation (5th generation, 5G) mobile communication system, an end-to-end network slice (network slicing, briefly referred to as a slice below) is proposed to provide a user with a customized network service. The slice may be considered as a logical subnet, and slices are isolated from each other, so that a service can be provided for the user in a targeted manner.

Currently, within a registration area of a terminal device, different cells may provide the terminal device with services corresponding to different slices. In this way, when the terminal device moves between different cells, a session associated with a slice may need to be frequently released and/or established. For example, a cell 1 is capable of providing the terminal device with a service corresponding to a slice 1, and a cell 2 is capable of providing the terminal device with the service corresponding to the slice 1 and a service corresponding to a slice 2. When the terminal device is within coverage of the cell 2, the cell 2 provides the terminal device with the service corresponding to the slice 2. If the terminal device moves from the cell 2 to the cell 1, a session associated with the slice 2 needs to be released. If the terminal device moves from the cell 1 back to the cell 2, the session associated with the slice 2 may need to be established.

Therefore, how to avoid the frequent release and/or establishment of the session associated with the slice needs to be further studied.

### SUMMARY

This application provides a communication method and apparatus, to avoid frequent release and/or establishment of a session associated with a slice.

According to a first aspect, an embodiment of this application provides a communication method. The method may be performed by a central unit, or may be performed by a chip or a circuit disposed in the central unit. This is not limited in this application. For ease of description, the following uses an example in which the method is performed by the central unit for description.

The method includes: The central unit determines to establish a radio bearer corresponding to a session associated with a first slice and/or suspend the session. The first cell is incapable of providing a terminal device with a service corresponding to the first slice, the first cell is a cell managed by the central unit, and is within a registration area of the terminal device, the first slice belongs to a first slice set, and the first slice set includes a slice allowed within all or a part of areas in the registration area for usage and/or a slice rejected within a part of areas in the registration area for usage. Then, the central unit may send first indication information to a distributed unit, where the first indication information indicates the distributed unit to establish the radio bearer, and/or indicates the distributed unit to suspend the session.

According to the method, when the first cell is incapable of providing the terminal device with the service corresponding to the first slice, the central unit that manages the first cell may indicate the distributed unit to establish the radio bearer corresponding to the session associated with the first slice and/or suspend the session, instead of releasing the session, so that frequent release and/or establishment of the session associated with the first slice can be avoided, thereby reducing signaling overheads between the terminal device and a network device caused by the frequent release and/or establishment of the session associated with the first slice, and reducing power consumption of the terminal device.

In a possible design, when the terminal device moves from a second cell to the first cell, or a resource allocated in the first cell for the first slice is limited, the central unit determines to establish the radio bearer and/or suspend the session. The second cell is capable of providing the terminal device with the service corresponding to the first slice, and is within the registration area. According to this design, when the first cell is incapable of providing the terminal device with the service corresponding to the first slice because the terminal device moves or the resource allocated in the first cell for the first slice is limited, the central unit that manages the first cell may indicate the distributed unit to establish the radio bearer corresponding to the session associated with the first slice and/or suspend the session, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the central unit may further suspend the session. Suspending the session may include: removing a transport network layer association (transport network layer association, TNLA) associated with the session. According to this design, when the first cell is incapable of providing the terminal device with the service corresponding to the first slice, the central unit that manages the first cell may suspend the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the central unit may receive first feedback information from the distributed unit. The first feedback information indicates that the distributed unit successfully establishes the radio bearer, and/or indicates that the distributed unit successfully suspends the session. According to this design, the central unit can learn, in a timely manner, that the distributed unit successfully establishes the radio bearer and/or successfully suspends the session, so that the radio bearer and/or the session can be effectively managed.

In a possible design, the central unit may send second indication information to the distributed unit, where the second indication information indicates the distributed unit not to schedule a resource on the radio bearer. According to this design, the central unit may indicate, by using the second indication information, the distributed unit not to schedule the resource on the radio bearer, to accurately indicate an operation of the distributed unit. This avoids a case in which the distributed unit fails to schedule the resource on the radio bearer because the service corresponding to the first slice cannot be provided.

In a possible design, the central unit may receive third indication information from the distributed unit, where the third indication information indicates that the distributed unit is incapable of scheduling the resource on the radio bearer. In this way, the central unit may effectively manage the distributed unit based on the third indication information.

In a possible design, the central unit sets, to a value less than a packet length of a single to-be-transmitted data packet, a value of a first maximum bit rate corresponding to the first slice. Then, the central unit may send the first maximum bit rate to the distributed unit.

In an implementation, the first maximum bit rate includes a maximum bit rate (maximum bit rate, MBR) of the first slice and/or an aggregate maximum bit rate (aggregate maximum bit rate, AMBR) of the session.

According to this design, the central unit sets, to the value less than the packet length of the single to-be-transmitted data packet, the value of the first maximum bit rate corresponding to the first slice. In this way, the distributed unit cannot perform data transmission by using the radio bearer corresponding to the session associated with the first slice, thereby avoiding unnecessary occupation of the resource on the radio bearer, and improving resource utilization efficiency.

In a possible design, the central unit stores a second maximum bit rate corresponding to the first slice, where the second maximum bit rate is a maximum bit rate that is from a core network device and that corresponds to the first slice.

In an implementation, the second maximum bit rate includes an MBR of the first slice and/or an AMBR of the session.

According to this design, when the session associated with the first slice needs to be resumed, a network side may quickly resume the session based on the second maximum bit rate, so that impact on data transmission of the terminal device can be avoided, and a data transmission latency of the terminal device can be shortened.

In a possible design, the central unit may determine, in one of the following implementations, to establish the radio bearer corresponding to the session associated with the first slice and/or suspend the session.

Implementation 1: When the terminal device moves from the second cell to the first cell, the central unit receives fourth indication information from a first access network device that manages the second cell, where the fourth indication information may indicate that the central unit accepts the session. The second cell is capable of providing the terminal device with the service corresponding to the first slice, and is within the registration area. Then, the central unit may determine, based on the fourth indication information, to establish the radio bearer and/or suspend the session.

In an implementation, the fourth indication information may be replaced with indication information #1, and the indication information #1 may indicate the central unit to establish the radio bearer and/or suspend the session. In this way, after receiving the indication information #1, the central unit may determine to establish the radio bearer and/or suspend the session.

In this implementation, when the terminal device moves from the second cell to the first cell, and the first cell is incapable of providing the terminal device with the service corresponding to the first slice, the central unit may determine, under the indication of the first access network device that manages the second cell, to establish the radio bearer corresponding to the session associated with the first slice and/or suspend the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

Implementation 2: The central unit receives first information from a core network device, where the first information is used by the central unit to determine to establish the radio bearer and/or suspend the session. Then, the central unit may determine, based on the first information, to establish the radio bearer and/or suspend the session.

In this implementation, when the first cell is incapable of providing the terminal device with the service corresponding to the first slice, the central unit may determine, based on the first information from the core network device, to establish the radio bearer corresponding to the session associated with the first slice and/or suspend the session, so that the frequent release and/or establishment of the session associated with the first slice can be avoided, thereby reducing signaling overheads between the terminal device and the network device caused by frequent release and/or establishment of the session associated with the first slice, and reducing power consumption of the terminal device.

In some possible manners, the first information may indicate the central unit to establish the radio bearer and/or suspend the session. In this way, after receiving the first information, the central unit may quickly determine to establish the radio bearer and/or suspend the session, thereby improving a speed and efficiency of establishing the radio bearer or suspending the session.

In some other possible manners, the first information may be used to determine that a first condition is met. The first condition includes: The first slice set includes the first slice. The first condition is used by the central unit to determine to establish the radio bearer and/or suspend the session.

In an implementation, the first information includes at least one of the following: partially allowed network slice selection assistance information (network slice selection assistance information, NSSAI) of the terminal device, rejected NSSAI partially in the registration area, or allowed NSSAI of the terminal device.

In this manner, when the first cell is incapable of providing the terminal device with the service corresponding to the first slice, the central unit can accurately determine, based on the first information, to establish the radio bearer and/or suspend the session, thereby improving effectiveness of establishing the radio bearer or suspending the session.

In an implementation, the central unit may further send second information to the core network device, where the second information is used by the core network device to determine to establish the radio bearer and/or suspend the session.

For example, the second information includes one of the following: information indicating that the session fails to be established; and information indicating that the session is successfully admitted.

In an implementation, the second information further includes fourth indication information, and the fourth indication information indicates that the central unit accepts the session.

According to the method, when the first cell is incapable of providing the terminal device with the service corresponding to the first slice, the central unit may send the second information to the core network device, so that the core network device accurately determines, based on the second information, to establish the radio bearer and/or suspend the session. In some possible implementations, the core network device sends the first information to the central unit only when determining to establish the radio bearer and/or suspend the session, so that the first information can be sent as required, thereby reducing signaling overheads.

Implementation 3: The central unit receives sixth indication information from the terminal device, where the sixth indication information indicates to establish the radio bearer and/or suspend the session. Then, the central unit may determine, based on the sixth indication information, to establish the radio bearer and/or suspend the session.

In this implementation, when the first cell is incapable of providing the terminal device with the service corresponding to the first slice, the central unit may determine, under the indication of the terminal device, to establish the radio bearer corresponding to the session associated with the first slice and/or suspend the session, so that the frequent release and/or establishment of the session associated with the first slice can be avoided, thereby reducing signaling overheads between the terminal device and the network device caused by frequent release and/or establishment of the session associated with the first slice, and reducing power consumption of the terminal device.

In an implementation, the central unit may send the sixth indication information to the core network device. According to the method, when the first cell is incapable of providing the terminal device with the service corresponding to the first slice, the central unit may indicate, in a timely manner, the core network device to establish the radio bearer and/or suspend the session.

According to a second aspect, an embodiment of this application provides a communication method. The method may be performed by a core network device, or may be performed by a chip or a circuit disposed in the core network device. This is not limited in this application. For ease of description, the following uses an example in which the method is performed by the core network device for description.

The method includes: The core network device determines to establish a radio bearer corresponding to a session associated with a first slice and/or suspend the session, where a first cell is incapable of providing a terminal device with a service corresponding to the first slice, the first cell is a cell managed by a central unit, and is within a registration area of the terminal device, the first slice belongs to a first slice set, and the first slice set includes a slice allowed within all or a part of areas in the registration area for usage and/or a slice rejected within a part of areas in the registration area for usage. Then, the core network device may send first information to the central unit, where the first information is used by the central unit to determine to establish the radio bearer and/or suspend the session.

According to the method, when the first cell is incapable of providing the terminal device with the service corresponding to the first slice, the core network device may indicate the central unit to establish the radio bearer corresponding to the session associated with the first slice and/or suspend the session, so that frequent release and/or establishment of the session associated with the first slice can be avoided, thereby reducing signaling overheads between the terminal device and a network device caused by frequent release and/or establishment of the session associated with the first slice, and reducing power consumption of the terminal device.

In a possible design, when the terminal device moves from a second cell to the first cell, or a resource allocated in the first cell for the first slice is limited, the core network device determines to establish the radio bearer and/or suspend the session, where the second cell is capable of providing the terminal device with the service corresponding to the first slice, and is within the registration area. According to this design, when the first cell is incapable of providing the terminal device with the service corresponding to the first slice because the terminal device moves or the resource allocated in the first cell for the first slice is limited, the core network device may indicate the central unit to establish the radio bearer corresponding to the session associated with the first slice and/or suspend the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In some possible manners, the first information indicates the central unit to establish the radio bearer and/or suspend the session. In this way, after receiving the first information, the central unit may quickly determine to establish the radio bearer and/or suspend the session, thereby improving a speed and efficiency of establishing the radio bearer and/or suspending the session.

In some other possible manners, the first information is used to determine that a first condition is met. The first condition includes: The first slice set includes the first slice. The first condition is used by the central unit to determine to establish the radio bearer and/or suspend the session.

In an implementation, the first information includes at least one of the following: partially allowed NSSAI of the terminal device, rejected NSSAI partially in the registration area, or allowed NSSAI of the terminal device.

In this manner, when the first cell is incapable of providing the terminal device with the service corresponding to the first slice, the core network device may send the first information to the central unit, so that the central unit accurately determines, based on the first information, to establish the radio bearer and/or suspend the session, thereby improving a speed and efficiency of establishing the radio bearer and/or suspending the session.

In a possible design, the core network device may receive second information from the central unit, where the second information is used by the core network device to determine to establish the radio bearer and/or suspend the session.

In a possible design, the second information includes one of the following: information indicating that the session fails to be established; and information indicating that the session is successfully admitted.

In an implementation, the second information further includes fourth indication information, and the fourth indication information indicates that the central unit accepts the session.

According to the method, when the first cell is incapable of providing the terminal device with the service corresponding to the first slice, the core network device can accurately determine, based on the second information, to establish the radio bearer and/or suspend the session. In some possible implementations, the core network device sends the first information to the central unit only when determining to establish the radio bearer and/or suspend the session, so that the first information can be sent as required, thereby reducing signaling overheads.

In a possible design, the core network device may determine, in one of the following implementations, to establish the radio bearer corresponding to the session associated with the first slice and/or suspend the session.

Implementation 1: The core network device determines, based on the fourth indication information, to establish the radio bearer and/or suspend the session. In this implementation, the core network device may quickly determine, based on the fourth indication information, to establish the radio bearer and/or suspend the session, thereby improving a speed and efficiency of establishing the radio bearer or suspending the session.

Implementation 2: The core network device determines, based on third information, to establish the radio bearer and/or suspend the session, where the third information is used to determine that the first cell is incapable of providing the terminal device with the service corresponding to the first slice, the first cell is within the registration area, and the first slice set includes the first slice.

In an implementation, the third information includes at least one of the following: partially allowed NSSAI of the terminal device, rejected NSSAI partially in the registration area, allowed NSSAI of the terminal device, information indicating the registration area, a tracking area (tracking area, TA) list in which partially allowed NSSAI is capable or incapable of being supported in the registration area, a TA list in which rejected NSSAI partially in the registration area is capable or incapable of being supported in the registration area, service area information of the allowed NSSAI capable or incapable of being supported in the registration area, service area information of the partially allowed NSSAI capable or incapable of being supported in the registration area, service area information of the rejected NSSAI partially in the registration area capable or incapable of being supported in the registration area, a cell identity of the first cell, or a TA to which the first cell belongs.

In this implementation, the core network device can accurately determine to establish the radio bearer and/or suspend the session, thereby improving a speed and efficiency of establishing the radio bearer or suspending the session.

Implementation 3: The second information includes the information indicating that the session fails to be established. If determining that a status of the session within the second cell is an active state, and the first slice belongs to the first slice set or both the first cell and the second cell are within the registration area, the core network device determines to establish the radio bearer and/or suspend the session. The second cell is a cell that provides the terminal device with the service before the core network device determines to establish the radio bearer and/or suspend the session.

In this implementation, the core network device can accurately determine to establish the radio bearer and/or suspend the session, thereby improving a speed and efficiency of establishing the radio bearer or suspending the session.

According to a third aspect, an embodiment of this application provides a communication method. The method may be performed by a distributed unit, or may be performed by a chip or a circuit disposed in the distributed unit. This is not limited in this application. For ease of description, the following uses an example in which the method is performed by the distributed unit for description.

The method includes: The distributed unit receives first indication information from a central unit, where the first indication information indicates the distributed unit to establish and/or suspend a radio bearer corresponding to a session associated with a first slice, a first cell is incapable of providing a terminal device with a service corresponding to the first slice, the first cell is a cell managed by the central unit, and is within a registration area of the terminal device, the first slice belongs to a first slice set, and the first slice set includes a slice allowed within all or a part of areas in the registration area for usage and/or a slice rejected within a part of areas in the registration area for usage. Then, the distributed unit may establish the radio bearer.

According to the method, when the first cell is incapable of providing the terminal device with the service corresponding to the first slice, the distributed unit may establish, under the indication of the central unit, the radio bearer corresponding to the session associated with the first slice, instead of releasing the session, so that frequent release and/or establishment of the session associated with the first slice can be avoided, thereby reducing signaling overheads between the terminal device and a network device caused by frequent release and/or establishment of the session associated with the first slice, and reducing power consumption of the terminal device.

In a possible design, when the terminal device moves from a second cell to the first cell, or a resource allocated in the first cell for the first slice is limited, the distributed unit receives the first indication information from the central unit, where the second cell is capable of providing the terminal device with the service corresponding to the first slice, and is within the registration area. According to this design, when the first cell is incapable of providing the terminal device with the service corresponding to the first slice because the terminal device moves or the resource allocated in the first cell for the first slice is limited, the distributed unit may establish, under the indication of the central unit, the radio bearer corresponding to the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the distributed unit may suspend the session. Suspending the session includes: removing a TNLA associated with the session. According to this design, when the first cell is incapable of providing the terminal device with the service corresponding to the first slice, the distributed unit may suspend the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the distributed unit may send first feedback information to the central unit, where the first feedback information indicates that the distributed unit successfully establishes the radio bearer, and/or indicates that the distributed unit successfully suspends the session. According to this design, the distributed unit may notify the central unit in a timely manner that the distributed unit successfully establishes the radio bearer and/or successfully suspends the session, so that the central unit effectively manages the radio bearer and/or the session.

In an implementation, the first feedback information is used to trigger the central unit to suspend the session. According to this design, when the first cell is incapable of providing the terminal device with the service corresponding to the first slice, the distributed unit may trigger, in a timely manner by using the first feedback information, the central unit to suspend the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the distributed unit may receive second indication information from the central unit, where the second indication information further indicates the distributed unit not to schedule the resource on the radio bearer. Then, the distributed unit skips scheduling the resource on the radio bearer based on the second indication information. According to this design, the distributed unit may skip scheduling the resource on the radio bearer based on the indication of the central unit, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device. In addition, this design can avoid a case in which the distributed unit fails to schedule the resource on the radio bearer because the service corresponding to the first slice cannot be provided.

In a possible design, the distributed unit may send third indication information to the central unit, where the third indication information indicates that the distributed unit is incapable of scheduling the resource on the radio bearer. According to this design, the distributed unit may notify the central unit in the timely manner that the distributed unit is incapable of scheduling the resource on the radio bearer.

In a possible design, the distributed unit may receive, from the central unit, a first maximum bit rate corresponding to the first slice, where a value of the first maximum bit rate is less than a value of a packet length of a single to-be-transmitted data packet.

In an implementation, the first maximum bit rate includes an MBR of the first slice and/or an AMBR of the session.

According to this design, the distributed unit is incapable of using the radio bearer corresponding to the session associated with the first slice to perform data transmission, thereby avoiding unnecessary occupation of the resource on the radio bearer.

According to a fourth aspect, an embodiment of this application provides a communication method. The method may be performed by a first access network device, or may be performed by a chip or a circuit disposed in the first access network device. This is not limited in this application. For ease of description, the following uses an example in which the method is performed by the first access network device for description.

The method includes: When a terminal device moves from the second cell to a first cell, the first access network device sends fourth indication information to a central unit, where the fourth indication information indicates that the central unit accepts a session associated with a first slice, the second cell is capable of providing the terminal device with a service corresponding to the first slice, the first cell is incapable of providing the terminal device with the service corresponding to the first slice, the first cell is a cell managed by the central unit, the first cell and the second cell are within a registration area of the terminal device, the first slice belongs to a first slice set, and the first slice set includes a slice allowed within all or a part of areas in the registration area for usage and/or a slice rejected within a part of areas in the registration area for usage.

In this implementation, when the terminal device moves from the second cell to the first cell, if the first cell is incapable of providing the terminal device with the service corresponding to the first slice, the first access network device that manages the second cell may indicate the central unit to establish the radio bearer corresponding to the session associated with the first slice and/or suspend the session, so that frequent release and/or establishment of the session associated with the first slice can be avoided, thereby reducing signaling overheads between the terminal device and a network device caused by the frequent release and/or establishment of the session associated with the first slice, and reducing power consumption of the terminal device.

In a possible design, the first access network device sends the fourth indication information to the central unit based on fourth information, where the fourth information is used to determine that the first cell is incapable of providing the terminal device with the service corresponding to the first slice, the second cell and the first cell are capable of providing the terminal device with a service corresponding to a second slice, and the first slice set includes the first slice and the second slice; or the first cell supports the first slice, but is incapable of providing the terminal device with the service corresponding to the first slice, a second cell is capable of providing the terminal device with the service corresponding to the first slice, and the first slice set includes the first slice.

In an implementation, the fourth information includes at least one of the following: partially allowed NSSAI of the terminal device, rejected NSSAI partially in the registration area, allowed NSSAI of the terminal device, a slice list supported by the second cell, a slice list supported by the first cell, or a slice available capacity of the first cell.

According to this design, the first access network device can accurately determine, based on the fourth information, to establish the radio bearer and/or suspend the session, thereby improving a speed and efficiency of establishing the radio bearer or suspending the session.

According to a fifth aspect, an embodiment of this application provides a communication method. The method may be performed by a terminal device, or may be performed by a chip or a circuit disposed in the terminal device. This is not limited in this application. For ease of description, the following uses an example in which the method is performed by the terminal device for description.

The method includes: The terminal device determines to establish a radio bearer corresponding to a session associated with a first slice and/or suspend the session, where a first cell is incapable of providing the terminal device with a service corresponding to the first slice, the first cell is a cell managed by a central unit, and is within a registration area of the terminal device, the first slice belongs to a first slice set, and the first slice set includes a slice allowed within all or a part of areas in the registration area for usage and/or a slice rejected within a part of areas in the registration area for usage. Then, the terminal device sends sixth indication information to the central unit, where the sixth indication information indicates to establish the radio bearer and/or suspend the session.

In this implementation, when the first cell is incapable of providing the terminal device with the service corresponding to the first slice, the terminal device may indicate the central unit to establish the radio bearer corresponding to the session associated with the first slice and/or suspend the session, so that frequent release and/or establishment of the session associated with the first slice can be avoided, thereby reducing signaling overheads between the terminal device and a network device caused by frequent release and/or establishment of the session associated with the first slice, and reducing power consumption of the terminal device.

In a possible design, when the terminal device moves from a second cell to the first cell, or a resource allocated in the first cell for the first slice is limited, the terminal device determines to establish the radio bearer and/or suspend the session, where the second cell is capable of providing the terminal device with the service corresponding to the first slice, and is within the registration area. According to this design, when the first cell is incapable of providing the terminal device with the service corresponding to the first slice because the terminal device moves or the resource allocated in the first cell for the first slice is limited, the terminal device may indicate the central unit to establish the radio bearer corresponding to the session associated with the first slice and/or suspend the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In a possible design, the terminal device may further send the sixth indication information to a core network device. According to this design, when the first cell is incapable of providing the terminal device with the service corresponding to the first slice, the terminal device may indicate the core network device to establish the radio bearer corresponding to the session associated with the first slice and/or suspend the session, so that the frequent release and/or establishment of the session associated with the first slice can be avoided, thereby reducing signaling overheads between the terminal device and the network device caused by the frequent release and/or establishment of the session associated with the first slice can be reduced, and reducing power consumption of the terminal device.

In a possible design, the terminal device obtains third information, where the third information is used to determine that the first cell is incapable of providing the terminal device with the service corresponding to the first slice, the first cell is within the registration area, and the first slice set includes the first slice. Then, the terminal device may determine, based on third information, to establish the radio bearer and/or suspend the session.

In an implementation, the third information includes at least one of the following: partially allowed NSSAI of the terminal device, rejected NSSAI partially in the registration area, allowed NSSAI of the terminal device, information indicating the registration area, a TA list in which the partially allowed NSSAI is capable or incapable of being supported in the registration area, a TA list in which the rejected NSSAI partially in the registration area is capable or incapable of being supported in the registration area, service area information of the allowed NSSAI capable or incapable of being supported in the registration area, service area information of the partially allowed NSSAI capable or incapable of being supported in the registration area, service area information of the rejected NSSAI partially in the registration area capable or incapable of being supported in the registration area, a cell identity of the first cell, or a TA to which the first cell belongs.

According to this design, the terminal device can accurately determine, based on the third information, to establish the radio bearer and/or suspend the session, thereby improving a speed and efficiency of establishing the radio bearer or suspending the session.

In a possible design, the terminal device deactivates the session. According to this design, the terminal device can deactivate, in a timely manner, the session associated with the first slice, to avoid using the session for data transmission, thereby reducing power consumption of the terminal device.

According to a sixth aspect, an embodiment of this application provides a communication method. The method may be performed by a first apparatus, or may be performed by a chip or a circuit disposed in the first apparatus. This is not limited in this application. For ease of description, the following uses an example in which the method is performed by the first apparatus for description.

The method includes: The first apparatus releases a session associated with a first slice. The first apparatus stores a context of the session within first duration after the session is released. In this way, a network side can quickly resume the session based on the context of the session, so that signaling overheads between the terminal device and a network device caused by frequent release and/or establishment of the session can be reduced, and power consumption of the terminal device can be reduced.

In a possible design, the first apparatus receives fifth indication information, where the fifth indication information indicates the first apparatus to resume the session. Then, the first apparatus may resume the session based on the context and the fifth indication information. According to this design, the first apparatus may quickly resume the session based on the fifth indication information and the stored context of the session, so that impact on data transmission of the terminal device can be avoided, and a data transmission delay of the terminal device can be shortened.

In some possible manners, the first apparatus is a central unit, and the first apparatus may receive the fifth indication information from the terminal device. According to this design, the central unit may quickly resume the session based on the indication of the terminal device, so that impact on data transmission of the terminal device can be avoided, and a data transmission delay of the terminal device can be shortened.

In some other possible manners, the first apparatus is a core network device, and the first apparatus may receive fifth indication information from the terminal device or a central unit. According to this design, the core network device can quickly resume the session based on the indication of the terminal device or the central unit, so that impact on data transmission of the terminal device can be avoided, and a data transmission delay of the terminal device can be shortened.

According to a seventh aspect, an embodiment of this application provides a communication method. The method may be performed by a central unit, or may be performed by a chip or a circuit disposed in the central unit. This is not limited in this application. For ease of description, the following uses an example in which the method is performed by the central unit for description.

The method includes: The central unit determines to store information about a session associated with a first slice. A first cell is incapable of providing a terminal device with a service corresponding to the first slice, the first cell is a cell managed by the central unit, and is within a registration area of the terminal device, the first slice belongs to a first slice set, and the first slice set includes a slice allowed within all or a part of areas in the registration area for usage and/or a slice rejected within a part of areas in the registration area for usage. Then, the central unit may store the information about the session.

In an implementation, the information about the session may include a context of the session, and the context of the session may include at least one of the following: an identifier of the session, single network slice selection assistance information (single network slice selection assistance information, S-NSSAI) associated with the session, an AMBR of the session, uplink user plane transport network layer (transport network layer, TNL) information of the session, a type of the session, a quality of service (quality of service, QoS) flow identifier associated with the session, or a QoS flow level QoS parameter associated with the session.

According to the method, when the first cell is incapable of providing the terminal device with the service corresponding to the first slice, the central unit that manages the first cell may store the information about the session associated with the first slice. In this way, a network side can quickly resume, based on the information about the session, the session associated with the first slice.

In a possible design, when the terminal device moves from a second cell to the first cell, or a resource allocated in the first cell for the first slice is limited, the central unit determines to store the information about the session, where the second cell is capable of providing the terminal device with the service corresponding to the first slice, and is within the registration area. According to this design, when the first cell is incapable of providing the terminal device with the service corresponding to the first slice because the terminal device moves or the resource allocated in the first cell for the first slice is limited, the central unit that manages the first cell may store the information about the session associated with the first slice. In this way, a network side can quickly resume, based on the information of the session, the session associated with the first slice, so that signaling overheads between the terminal device and a network device caused by frequent release and/or establishment of the session associated with the first slice can be reduced, and power consumption of the terminal device can be reduced.

In a possible design, when the terminal device moves from the first cell to a third cell, the central unit may send the information about the session to an access network device that manages the third cell. In this way, the access network device that manages the third cell can quickly resume the session associated with the first slice, so that signaling overheads between the terminal device and the network device caused by the frequent release and/or establishment of the session associated with the first slice can be reduced, and power consumption of the terminal device can be reduced.

In a possible design, the central unit may determine, in one of the following implementations, to store the information about the session associated with the first slice.

Implementation a1: When the terminal device moves from the second cell to the first cell, the central unit receives fourth indication information from a first access network device that manages the second cell, where the fourth indication information may indicate that the central unit accepts the session. The second cell is capable of providing the terminal device with the service corresponding to the first slice, and is within the registration area. Then, the central unit may determine, based on the fourth indication information, to store the information about the session associated with the first slice.

In an implementation, the fourth indication information may be replaced with indication information #3, and the indication information #3 may indicate the central unit to store the information about the session associated with the first slice. In this way, after receiving the indication information #3, the central unit may determine to store the information about the session associated with the first slice.

In this implementation, when the terminal device moves from the second cell to the first cell, if the first cell is incapable of providing the terminal device with the service corresponding to the first slice, the central unit may store, under the indication of the first access network device that manages the second cell, the information about the session associated with the first slice In this way, the network side can quickly resume, based on the information of the session, the session associated with the first slice, so that signaling overheads between the terminal device and the network device caused by the frequent release and/or establishment of the session associated with the first slice can be reduced, and power consumption of the terminal device can be reduced.

Implementation a2: The central unit receives information #1 from a core network device, where the information #1 is used by the central unit to determine to store the information about the session associated with the first slice. Then, the central unit may determine, based on the information #1, to store the information about the session associated with the first slice.

In this implementation, when the first cell is incapable of providing the terminal device with the service corresponding to the first slice, the central unit may determine, based on the information #1 from the core network device, to store the information about the session associated with the first slice. In this way, a network side can quickly resume, based on the information of the session, the session associated with the first slice, so that signaling overheads between the terminal device and the network device caused by the frequent release and/or establishment of the session associated with the first slice can be reduced, and power consumption of the terminal device can be reduced.

In some possible manners, the information #1 may indicate the central unit to store the information about the session associated with the first slice. In this way, after receiving the information #1, the central unit may quickly determine to store the information about the session associated with the first slice, thereby improving a speed and efficiency of storing the information about the session.

In some other possible manners, the information #1 may be used to determine that a first condition is met. The first condition includes: The first slice set includes the first slice. The first condition is used by the central unit to determine to store the information about the session associated with the first slice.

In an implementation, the information #1 includes at least one of the following: partially allowed NSSAI of the terminal device, rejected NSSAI partially in the registration area, or allowed NSSAI of the terminal device.

In this manner, when the first cell is incapable of providing the terminal device with the service corresponding to the first slice, the central unit can accurately determine to store the information about the session, thereby improving a speed and efficiency of storing the information about the session.

In an implementation, the central unit may further send second information to the core network device, where the second information is used by the core network device to determine to store the information about the session associated with the first slice.

For example, the second information includes one of the following: information indicating that the session fails to be established; and information indicating that the session is successfully admitted.

In an implementation, the second information further includes fourth indication information, and the fourth indication information indicates that the central unit accepts the session.

According to the method, when the first cell is incapable of providing the terminal device with the service corresponding to the first slice, the central unit may send the second information to the core network device, so that the core network device can accurately determine, based on the second information, to store the information about the session associated with the first slice. In some possible implementations, the core network device sends the information #1 to the central unit only when determining to store the information about the session associated with the first slice, so that the information #1 can be sent as required, thereby reducing signaling overheads.

Implementation a3: The central unit receives indication information #4 from the terminal device, where the indication information #4 indicates to store the information about the session associated with the first slice. Then, the central unit may determine, based on the indication information #4, to store the information about the session associated with the first slice.

In this implementation, when the first cell is incapable of providing the terminal device with the service corresponding to the first slice, the central unit may determine, under the indication of the terminal device, to store the information about the session associated with the first slice. In this way, a network side can quickly resume, based on the information of the session, the session associated with the first slice, so that signaling overheads between the terminal device and the network device caused by the frequent release and/or establishment of the session associated with the first slice can be reduced, and power consumption of the terminal device can be reduced.

In an implementation, the central unit may send the indication information #4 to the core network device. According to the method, when the first cell is incapable of providing the terminal device with the service corresponding to the first slice, the central unit may indicate, in a timely manner, the core network device to store the information about the session associated with the first slice.

According to an eighth aspect, an embodiment of this application provides a communication apparatus. The communication apparatus may be configured to implement the communication method in the first aspect. In a possible implementation, the communication apparatus may include a corresponding module or unit for performing the methods/operations/steps/actions described in the first aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: determine to establish a radio bearer corresponding to a session associated with a first slice and/or suspend the session, where a first cell is incapable of providing a terminal device with a service corresponding to the first slice, the first cell is a cell managed by the communication apparatus, and is within a registration area of the terminal device, the first slice belongs to a first slice set, and the first slice set includes a slice allowed within all or a part of areas in the registration area for usage and/or a slice rejected within a part of areas in the registration area for usage; and send first indication information to a distributed unit via the communication unit, where the first indication information indicates the distributed unit to establish the radio bearer, and/or indicates the distributed unit to suspend the session.

In a possible design, the processing unit is configured to: when the terminal device moves from a second cell to the first cell, or a resource allocated in the first cell for the first slice is limited, determine to establish the radio bearer and/or suspend the session. The second cell is capable of providing the terminal device with the service corresponding to the first slice, and is within the registration area.

In a possible design, the processing unit is further configured to suspend the session. Suspending the session may include: removing a TNLA associated with the session.

In a possible design, the processing unit is further configured to receive first feedback information from the distributed unit via the communication unit. The first feedback information indicates that the distributed unit successfully establishes the radio bearer, and/or indicates that the distributed unit successfully suspends the session.

In a possible design, the processing unit is further configured to send second indication information to the distributed unit via the communication unit, where the second indication information indicates the distributed unit not to schedule a resource on the radio bearer.

In a possible design, the processing unit is further configured to receive third indication information from the distributed unit via the communication unit, where the third indication information indicates that the distributed unit is incapable of scheduling the resource on the radio bearer.

In a possible design, the processing unit is further configured to: set, to a value less than a packet length of a single to-be-transmitted data packet, a value of a first maximum bit rate corresponding to the first slice; and send the first maximum bit rate to the distributed unit via the communication unit.

In an implementation, the first maximum bit rate includes an MBR of the first slice and/or an AMBR of the session.

In a possible design, the processing unit is further configured to store a second maximum bit rate corresponding to the first slice, where the second maximum bit rate is a maximum bit rate that is from a core network device and that corresponds to the first slice.

In an implementation, the second maximum bit rate includes an MBR of the first slice and/or an AMBR of the session.

In a possible design, the processing unit may be configured to determine, in one of the following implementations, to establish the radio bearer corresponding to the session associated with the first slice and/or suspend the session.

Implementation 1: The processing unit is configured to: when the terminal device moves from the second cell to the first cell, receive, via the communication unit, fourth indication information from a first access network device that manages the second cell, where the fourth indication information may indicate that the communication apparatus accepts the session, and the second cell is capable of providing the terminal device with the service corresponding to the first slice, and is within the registration area; and determine, based on the fourth indication information, to establish the radio bearer and/or suspend the session.

In an implementation, the fourth indication information may be replaced with indication information #1, and the indication information #1 may indicate the central unit to establish the radio bearer and/or suspend the session. In this way, after receiving the indication information #1, the central unit may determine to establish the radio bearer and/or suspend the session.

Implementation 2: The processing unit is configured to: receive first information from the core network device via the communication unit, where the first information is used by the communication apparatus to determine to establish the radio bearer and/or suspend the session; and determine, based on the first information, to establish the radio bearer and/or suspend the session.

In some possible manners, the first information may indicate the communication apparatus to establish the radio bearer and/or suspend the session.

In some other possible manners, the first information may be used to determine that a first condition is met. The first condition includes: The first slice set includes the first slice. The first condition is used by the communication apparatus to determine to establish the radio bearer and/or suspend the session.

In an implementation, the first information includes at least one of the following: partially allowed NSSAI of the terminal device, rejected NSSAI partially in the registration area, or allowed NSSAI of the terminal device.

In an implementation, the processing unit is further configured to send second information to the core network device via the communication unit, where the second information is used by the core network device to determine to establish the radio bearer and/or suspend the session.

For example, the second information includes one of the following: information indicating that the session fails to be established; and information indicating that the session is successfully admitted.

In an implementation, the second information further includes fourth indication information, and the fourth indication information indicates that the communication apparatus accepts the session.

Implementation 3: The processing unit is configured to: receive sixth indication information from the terminal device via the communication unit, where the sixth indication information indicates to establish the radio bearer and/or suspend the session; and determine, based on the sixth indication information, to establish the radio bearer and/or suspend the session.

In an implementation, the processing unit is further configured to send the sixth indication information to the core network device via the communication unit.

According to a ninth aspect, an embodiment of this application provides a communication apparatus. The communication apparatus may be configured to implement the communication method in the second aspect. In a possible implementation, the communication apparatus may include a corresponding module or unit for performing the methods/operations/steps/actions described in the second aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: determine to establish a radio bearer corresponding to a session associated with a first slice and/or suspend the session, where a first cell is incapable of providing a terminal device with a service corresponding to the first slice, the first cell is a cell managed by a central unit, and is within a registration area of the terminal device, the first slice belongs to a first slice set, and the first slice set includes a slice allowed within all or a part of areas in the registration area for usage and/or a slice rejected within a part of areas in the registration area for usage; and send first information to the central unit via the communication unit, where the first information is used by the central unit to determine to establish the radio bearer and/or suspend the session.

In a possible design, the processing unit is configured to: when the terminal device moves from a second cell to the first cell, or a resource allocated in the first cell for the first slice is limited, determine to establish the radio bearer and/or suspend the session, where the second cell is capable of providing the terminal device with the service corresponding to the first slice, and is within the registration area.

In some possible manners, the first information indicates the central unit to establish the radio bearer and/or suspend the session.

In some other possible manners, the first information is used to determine that a first condition is met. The first condition includes: The first slice set includes the first slice. The first condition is used by the central unit to determine to establish the radio bearer and/or suspend the session.

In a possible design, the processing unit is further configured to receive second information from the central unit via the communication unit, where the second information is used by the communication apparatus to determine to establish the radio bearer and/or suspend the session.

In a possible design, the second information includes one of the following: information indicating that the session fails to be established; and information indicating that the session is successfully admitted.

In an implementation, the second information further includes fourth indication information, and the fourth indication information indicates that the central unit accepts the session.

In a possible design, the processing unit may determine, in one of the following implementations, to establish the radio bearer corresponding to the session associated with the first slice and/or suspend the session.

Implementation 1: The processing unit is configured to determine, based on the fourth indication information, to establish the radio bearer and/or suspend the session.

Implementation 2: The processing unit is configured to determine, based on third information, to establish the radio bearer and/or suspend the session, where the third information is used to determine that the first cell is incapable of providing the terminal device with the service corresponding to the first slice, the first cell is within the registration area, and the first slice set includes the first slice.

In an implementation, the third information includes at least one of the following: partially allowed NSSAI of the terminal device, rejected NSSAI partially in the registration area, allowed NSSAI of the terminal device, information indicating the registration area, a TA list in which the partially allowed NSSAI is capable or incapable of being supported in the registration area, a TA list in which the rejected NSSAI partially in the registration area is capable or incapable of being supported in the registration area, service area information of the allowed NSSAI capable or incapable of being supported in the registration area, service area information of the partially allowed NSSAI capable or incapable of being supported in the registration area, service area information of the rejected NSSAI partially in the registration area capable or incapable of being supported in the registration area, a cell identity of the first cell, or a TA to which the first cell belongs.

Implementation 3: The second information includes the information indicating that the session fails to be established. The processing unit is configured to: when determining that a status of the session within the second cell is an active state, and the first slice belongs to the first slice set or both the first cell and the second cell are within the registration area, determine to establish the radio bearer and/or suspend the session. The second cell is a cell that provides the terminal device with the service before the communication apparatus determines to establish the radio bearer and/or suspend the session.

According to a tenth aspect, an embodiment of this application provides a communication apparatus. The communication apparatus may be configured to implement the communication method in the third aspect. In a possible implementation, the communication apparatus may include a corresponding module or unit for performing the methods/operations/steps/actions described in the third aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: receive first indication information from a central unit via the communication unit, where the first indication information indicates the communication apparatus to establish and/or suspend a radio bearer corresponding to a session associated with a first slice, a first cell is incapable of providing a terminal device with a service corresponding to the first slice, the first cell is a cell managed by the central unit, and is within a registration area of the terminal device, the first slice belongs to a first slice set, and the first slice set includes a slice allowed within all or a part of areas in the registration area for usage and/or a slice rejected within a part of areas in the registration area for usage; and establish the radio bearer.

In a possible design, the processing unit is configured to: when the terminal device moves from a second cell to the first cell, or a resource allocated in the first cell for the first slice is limited, receive the first indication information from the central unit via the communication unit, where the second cell is capable of providing the terminal device with the service corresponding to the first slice, and is within the registration area.

In a possible design, the processing unit is further configured to suspend the session. Suspending the session includes: removing a TNLA associated with the session.

In a possible design, the processing unit is further configured to send first feedback information to the central unit via the communication unit, where the first feedback information indicates that the communication apparatus successfully establishes the radio bearer, and/or indicates that the communication apparatus successfully suspends the session.

In an implementation, the first feedback information is used to trigger the central unit to suspend the session.

In a possible design, the processing unit is further configured to: receive second indication information from the central unit via the communication unit, where the second indication information further indicates the communication apparatus not to schedule a resource on the radio bearer; and skip scheduling the resource on the radio bearer based on the second indication information.

In a possible design, the processing unit is further configured to send third indication information to the central unit via the communication unit, where the third indication information indicates that the communication apparatus is incapable of scheduling the resource on the radio bearer.

In a possible design, the processing unit is further configured to receive, from the central unit via the communication unit, a first maximum bit rate corresponding to the first slice, where a value of the first maximum bit rate is less than a value of a packet length of a single to-be-transmitted data packet.

In an implementation, the first maximum bit rate includes an MBR of the first slice and/or an AMBR of the session.

According to an eleventh aspect, an embodiment of this application provides a communication apparatus. The communication apparatus may be configured to implement the communication method in the fourth aspect. In a possible implementation, the communication apparatus may include a corresponding module or unit for performing the methods/operations/steps/actions described in the fourth aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: when a terminal device moves from a second cell to a first cell, send fourth indication information to a central unit via the communication unit, where the fourth indication information indicates that the central unit accepts a session associated with a first slice, the second cell is capable of providing the terminal device with a service corresponding to the first slice, the first cell is incapable of providing the terminal device with the service corresponding to the first slice, the first cell is a cell managed by the central unit, the first cell and the second cell are within a registration area of the terminal device, the first slice belongs to a first slice set, and the first slice set includes a slice allowed within all or a part of areas in the registration area for usage and/or a slice rejected within a part of areas in the registration area for usage.

In a possible design, the processing unit is configured to send the fourth indication information to the central unit based on fourth information via the communication unit, where the fourth information is used to determine that the first cell is incapable of providing the terminal device with the service corresponding to the first slice, the second cell and the first cell are capable of providing the terminal device with a service corresponding to a second slice, and the first slice set includes the first slice and the second slice.

In an implementation, the fourth information includes at least one of the following: partially allowed NSSAI of the terminal device, rejected NSSAI partially in the registration area, allowed NSSAI of the terminal device, a slice list supported by the first cell, a slice list supported by the second cell, or a slice available capacity of the first cell.

According to a twelfth aspect, an embodiment of this application provides a communication apparatus. The communication apparatus may be configured to implement the communication method in the fifth aspect. In a possible implementation, the communication apparatus may include a corresponding module or unit for performing the methods/operations/steps/actions described in the fifth aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: determine to establish a radio bearer corresponding to a session associated with a first slice and/or suspend the session, where a first cell is incapable of providing the communication apparatus with a service corresponding to the first slice, the first cell is a cell managed by a central unit, and is within a registration area of the communication apparatus, the first slice belongs to a first slice set, and the first slice set includes a slice allowed within all or a part of areas in the registration area for usage and/or a slice rejected within a part of areas in the registration area for usage; and send sixth indication information to the central unit via the communication unit, where the sixth indication information indicates to establish the radio bearer and/or suspend the session.

In a possible design, the processing unit is configured to: when the communication apparatus moves from a second cell to the first cell, or a resource allocated in the first cell for the first slice is limited, determine to establish the radio bearer and/or suspend the session. The second cell is capable of providing the communication apparatus with the service corresponding to the first slice, and is within the registration area.

In a possible design, the processing unit is further configured to send the sixth indication information to a core network device via the communication unit.

In a possible design, the processing unit is further configured to: obtain third information, where the third information is used to determine that the first cell is incapable of providing the communication apparatus with the service corresponding to the first slice, the first cell is within the registration area, and the first slice set includes the first slice; and determine, based on the third information, to establish the radio bearer and/or suspend the session.

In an implementation, the third information includes at least one of the following: partially allowed NSSAI of a terminal device, rejected NSSAI partially in the registration area, allowed NSSAI of the terminal device, information indicating the registration area, a TA list in which the partially allowed NSSAI is capable or incapable of being supported in the registration area, a TA list in which the rejected NSSAI partially in the registration area is capable or incapable of being supported in the registration area, service area information of the allowed NSSAI capable or incapable of being supported in the registration area, service area information of the partially allowed NSSAI capable or incapable of being supported in the registration area, service area information of the rejected NSSAI partially in the registration area capable or incapable of being supported in the registration area, a cell identity of the first cell, or a TA to which the first cell belongs.

In a possible design, the processing unit is further configured to deactivate the session.

According to a thirteenth aspect, an embodiment of this application provides a communication apparatus. The communication apparatus may be configured to implement the communication method in the sixth aspect. In a possible implementation, the communication apparatus may include a corresponding module or unit for performing the methods/operations/steps/actions described in the sixth aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: release a session associated with a first slice; and the communication apparatus stores a context of the session within first duration after the session is released.

In a possible design, the processing unit is configured to: receive fifth indication information via the communication unit, where the fifth indication information indicates the communication apparatus to resume the session; and resume the session based on the context and the fifth indication information.

In some possible manners, the communication apparatus is a central unit, and the processing unit is configured to receive the fifth indication information from a terminal device via the communication unit.

In some other possible manners, the communication apparatus is a core network device, and the processing unit is configured to receive the fifth indication information from a terminal device or a central unit via the communication unit.

According to a fourteenth aspect, an embodiment of this application provides a communication apparatus. The communication apparatus may be configured to implement the communication method in the seventh aspect. In a possible implementation, the communication apparatus may include a corresponding module or unit for performing the methods/operations/steps/actions described in the seventh aspect. The module or unit may be a hardware circuit, may be software, or may be implemented by a hardware circuit in combination with software.

In a possible implementation, the apparatus includes a communication unit and a processing unit. The communication unit configured to: receive and/or send information. The processing unit is configured to: determine to store information about a session associated with a first slice, where a first cell is incapable of providing a terminal device with a service corresponding to the first slice, the first cell is a cell managed by the communication apparatus, and is within a registration area of the terminal device, the first slice belongs to a first slice set, and the first slice set includes a slice allowed within all or a part of areas in the registration area for usage and/or a slice rejected within a part of areas in the registration area for usage; and store the information about the session.

In a possible design, the processing unit is configured to: when the terminal device moves from a second cell to the first cell, or a resource allocated in the first cell for the first slice is limited, determine to store the information about the session, where the second cell is capable of providing the terminal device with the service corresponding to the first slice, and is within the registration area.

In an implementation, the information about the session may include a context of the session, and the context of the session may include at least one of the following: an identifier of the session, S-NSSAI associated with the session, an AMBR of the session, uplink user plane TNL information of the session, a type of the session, a QoS flow identifier associated with the session, or a QoS flow level QoS parameter associated with the session.

In a possible design, the processing unit is further configured to: when the terminal device moves from the first cell to a third cell, send, via the communication unit, the information about the session to an access network device that manages the third cell.

In a possible design, the processing unit may determine, in one of the following implementations, to store the information about the session associated with the first slice.

Implementation a1: The processing unit is configured to: when the terminal device moves from the second cell to the first cell, receive, via the communication unit, fourth indication information from a first access network device that manages the second cell, where the fourth indication information may indicate that the communication apparatus accepts the session, and the second cell is capable of providing the terminal device with the service corresponding to the first slice, and is within the registration area; and determine, based on the fourth indication information, to store the information about the session associated with the first slice.

In an implementation, the fourth indication information may be replaced with indication information #3, and the indication information #3 may indicate the central unit to store the information about the session associated with the first slice. In this way, after receiving the indication information #3, the central unit may determine to store the information about the session associated with the first slice.

Implementation a2: The processing unit is configured to: receive information #1 from a core network device via the communication unit, where the information #1 is used by the communication apparatus to determine to store the information about the session associated with the first slice; and determine, based on the information #1, to store the information about the session associated with the first slice.

In some possible manners, the information #1 may indicate the communication apparatus to store the information about the session associated with the first slice.

In some other possible manners, the information #1 may be used to determine that a first condition is met. The first condition includes: The first slice set includes the first slice. The first condition is used by the communication apparatus to determine to store the information about the session associated with the first slice.

In an implementation, the information #1 includes at least one of the following: partially allowed NSSAI of the terminal device, rejected NSSAI partially in the registration area, or allowed NSSAI of the terminal device.

In an implementation, the processing unit is further configured to send second information to the core network device via the communication unit, where the second information is used by the core network device to determine to store the information about the session associated with the first slice.

For example, the second information includes one of the following: information indicating that the session fails to be established; and information indicating that the session is successfully admitted.

In an implementation, the second information further includes fourth indication information, and the fourth indication information indicates that the communication apparatus accepts the session.

Implementation a3: The processing unit is configured to: receive indication information #4 from the terminal device via the communication unit, where the indication information #4 indicates to store the information about the session associated with the first slice; and determine, based on the indication information #4, to store the information about the session associated with the first slice.

In an implementation, the processing unit is configured to send the indication information #4 to a core network device via the communication unit.

According to a fifteenth aspect, an embodiment of this application provides a communication apparatus, including a processor, configured to: execute a computer program (or computer-executable instructions) stored in a memory and/or use a logic circuit, to cause the apparatus to perform the method according to any one of the foregoing aspects and the possible designs of the foregoing aspects.

In a possible implementation, the apparatus further includes a memory.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a sixteenth aspect, an embodiment of this application provides a communication system, including at least two of the following: the communication apparatus in the eighth aspect, the communication apparatus in the ninth aspect, the communication apparatus in the tenth aspect, the communication apparatus in the eleventh aspect, or the communication apparatus in the twelfth aspect.

According to a seventeenth aspect, an embodiment of this application provides a communication system, including the communication apparatus in the thirteenth aspect.

In an implementation, the communication system further includes a terminal device.

In a possible design, when the communication apparatus in the thirteenth aspect is a central unit, the communication system further includes a core network device.

In a possible design, when the communication apparatus in the thirteenth aspect is a core network device, the communication system further includes a central unit.

According to an eighteenth aspect, an embodiment of this application provides a communication system, including the communication apparatus in the fourteenth aspect. The communication system further includes at least one of the following: a terminal device or a distributed unit.

According to a nineteenth aspect, an embodiment of this application further provides a computer program. When the computer program is run on a computer, the computer is caused to perform the method provided in any one of the foregoing aspects.

According to a twentieth aspect, an embodiment of this application further provides a computer-readable storage medium. The computer-readable storage medium stores a computer program. When the computer program is executed by a computer, the computer is caused to perform the method provided in any one of the foregoing aspects.

According to a twenty-first aspect, an embodiment of this application further provides a chip. The chip is configured to read a computer program stored in a memory, to perform the method according to any one of the foregoing aspects.

According to a twenty-second aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are necessary for the computer apparatus. The chip system may include a chip, or may include a chip and another discrete device.

According to a twenty-third aspect, an embodiment of this application further provides a computer program product including computer-executable instructions. When the computer program product is run, some or all of the steps in the method according to any one of the foregoing aspects are performed.

For technical effects that can be achieved in any one of the eighth aspect to the twenty-third aspect, refer to the descriptions of the technical effects that can be achieved in any possible design of any one of the first aspect to the seventh aspect. Repeated parts are not described.

### BRIEF DESCRIPTION OF DRAWINGS

FIG. 1 is a diagram of an architecture of a communication system according to an embodiment of this application;
FIG. 2 is a diagram of a scenario according to an embodiment of this application;
FIG. 3 is a diagram of another scenario according to an embodiment of this application;
FIG. 4 is a diagram of still another scenario according to an embodiment of this application;
FIG. 5 is a flowchart of a first communication method according to an embodiment of this application;
FIG. 6 is a flowchart of a second communication method according to an embodiment of this application;
FIG. 7 is a flowchart of a third communication method according to an embodiment of this application;
FIG. 8 is a flowchart of a fourth communication method according to an embodiment of this application;
FIG. 9A, FIG. 9B, and FIG. 9C are a flowchart of a fifth communication method according to an embodiment of this application;
FIG. 10A and FIG. 10B are a flowchart of a sixth communication method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes an architecture of a communication system to which methods provided in this application are applied.

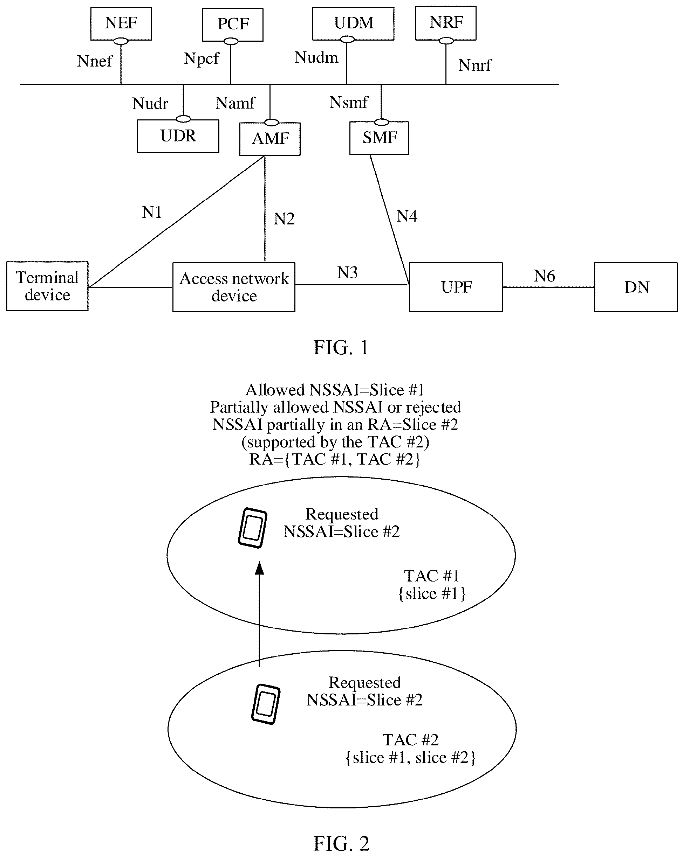

FIG. 1 is a diagram of an architecture of a communication system to which an embodiment of this application is applicable. FIG. 1 shows a 5G network architecture based on a service-based architecture. As shown in FIG. 1, the communication system may include three parts: a terminal device part, an operator network part, and a data network (data network, DN) part. The following describes functions of some network elements.

A terminal device (terminal device) is a device having a wireless transceiver function, and may be deployed on the land, including an indoor device, an outdoor device, a handheld device, or a vehicle-mounted device; may be deployed on a water surface (for example, on a ship); or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a user equipment (user equipment, UE), or the like.

The terminal device may establish a connection to an operator network through an interface (for example, N1) provided by the operator network, and use services such as a data service and/or a voice service provided by the operator network. The terminal device may further access the DN through the operator network, and use an operator service deployed on the DN and/or a service provided by a third party. The third party may be a service party other than the operator network and the terminal device, and may provide the terminal device with services such as a data service and/or a voice service. A specific representation form of the third party may be specifically determined based on an actual application scenario, and is not limited herein.

The operator network may be a network deployed by an operator, and may include an access network device and a core network device. In a possible implementation method, the operator network further includes an application function (application function, AF) network element. Alternatively, the AF network element may not belong to the operator network, but belongs to a third party.

The access network device is a device in a wireless network, for example, includes a radio access network (radio access network, RAN) node or a radio access network device that connects the terminal device to the wireless network. Currently, examples of some access network devices include a next-generation base station (gNodeB, gNB) in 5G, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), and the like. In an implementation, the access network device may alternatively be an access network device in a future communication system (for example, a 6G communication system).

In a network structure, the access network device may alternatively be a central unit (central unit, CU), a distributed unit (distributed unit, DU), a CU-control plane (control plane, CP), or a CU-user plane (user plane, UP); or the access network device may alternatively include a CU and a DU. The CU and the DU are separately disposed, or may be included in a same network element, for example, a BBU. It may be understood that the access network device is divided into the CU and the DU from a perspective of logical functions. The CU and the DU are connected through an F1 interface. The CU may represent a gNB, and is connected to a core network through an NG interface. The CU and the DU may be physically separated, or may be deployed together. This is not specifically limited in embodiments of this application. One CU may be connected to one DU, or a plurality of DUs may share one CU, to reduce costs and facilitate network expansion. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and other layers such as a radio link control (radio link control, RLC) layer, a media access control (media access control, MAC) layer, and a physical layer (PHY) are deployed on the DU. Embodiments of this application are not completely limited to the foregoing protocol stack splitting manner, and there may be another splitting manner.

In addition, the access network device may alternatively be a radio unit (radio unit, RU), or the like. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN) system, the CU may be referred to as an O-CU (open CU), the DU may be referred to as an O-DU (open DU), the CU-CP may be referred to as an O-CU-CP (open CU-CP), and the CU-UP may be referred to as an O-CU-UP (open CU-UP).

The core network device may include at least one of the following network elements: a mobility management network element, a session management network element, a user plane network element, a data management network element (for example, a unified data management (unified data management, UDM) network element), a unified data repository (unified data repository, UDR) network element, a network exposure network element (for example, a network exposure function (network exposure function, NEF) network element), a policy control network element (for example, a policy control function (policy control function, PCF) network element), a network repository function (network repository function, NRF) network element, or the like. The following separately describes some of the network elements.

In this application, the mobility management network element is a control plane network element provided by the operator network, and is responsible for access control and mobility management when the terminal device accesses the operator network, for example, including functions such as mobility status management, temporary user identity assignment, and user authentication and authorization. In 5G, the mobility management network element may be an access and mobility management function (access and mobility management function, AMF) network element. In future communication, for example, 6th generation (6th generation, 6G), the mobility management network element may still be an AMF network element or have another name. This is not limited in this application.

In this application, the session management network element is a control plane network element provided by the operator network, and is responsible for managing a packet data unit (packet data unit, PDU) session of the terminal device. The PDU session is a channel for transmitting a PDU, and the terminal device needs to transmit the PDU to the DN through the PDU session. The SMF network element is responsible for establishment, maintenance, deletion, and the like of the PDU session. Functions of the session management network element include session management (for example, session establishment, modification, and release, including tunnel maintenance between the user plane network element and the access network device), user plane network element selection and control, service and session continuity (service and session continuity, SSC) mode selection, roaming, and the like. In 5G, the session management network element may be a session management function (session management function, SMF) network element. In the future communication, for example, 6G, the session management network element may still be an SMF network element, or a network element that has another name but has all or some functions of the session management network element. This is not limited in this application.

In this application, the user plane network element is a gateway provided by the operator, and is a gateway for communication between the operator network and the DN. Functions of the user plane network element include data packet routing and transmission, packet detection, service usage reporting, QoS processing, lawful interception, uplink packet detection, downlink data packet storage, and the like. In 5G, the user plane network element may be a user plane function (user plane function, UPF) network element. In the future communication, for example, 6G, the user plane network element may still be a UPF network element, or a network element that has another name but has all or some functions of the user plane network element. This is not limited in this application.

In embodiments of this application, a communication apparatus configured to implement a function of the access network device, the terminal device, or the core network device may be the access network device, the terminal device, or the core network device, or may be an apparatus that is capable of supporting the access network device, the terminal device, or the core network device in implementing the function, for example, a chip system. The apparatus may be mounted in the access network device, the terminal device, or the core network device. In the technical solutions provided in embodiments of this application, an example in which an apparatus configured to implement the function of the access network device is the access network device, an apparatus configured to implement the function of the terminal device is the terminal device, and an apparatus configured to implement the function of the core network device is the core network device is used to describe the technical solutions provided in embodiments of this application.

The DN is a network outside the operator network. The operator network may access a plurality of DNs, and a plurality of services may be deployed on the DN, to provide the terminal device with services such as a data service and/or a voice service. For example, the DN is a private network of an intelligent factory, a sensor mounted in a workshop of the intelligent factory may be the terminal device, a control server of the sensor is deployed in the DN, and the control server may provide the sensor with a service. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like on the internal office network of the company.

In FIG. 1, Nnef, Npcf, Nudm, Nnrf, Namf, Nsmf, Nudr, N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

It should be noted that the communication system shown in FIG. 1 does not constitute a limitation on a communication system to which embodiments of this application are applicable. Therefore, the communication method provided in embodiments of this application may be further applicable to communication systems of various standards, for example, a long term evolution (long term evolution, LTE) communication system, a 5G communication system, a 6G communication system, a future communication system, vehicle-to-everything (vehicle-to-everything, V2X), long term evolution-vehicle (LTE-vehicle, LTE-V), vehicle-to-vehicle (vehicle-to-vehicle, V2V), internet of vehicles, machine type communication (Machine Type Communication, MTC), internet of things (internet of things, IoT), long term evolution-machine-to-machine (LTE-machine-to-machine, LTE-M), machine-to-machine (machine-to-machine, M2M), and internet of things. In addition, the communication system provided in this application may be used in a terrestrial network (terrestrial network, TN) and/or a non-terrestrial network (non-terrestrial network, NTN). This is not limited. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

For ease of understanding of this application, the following describes terms in this application.
(1) TA: is a concept set for location management of a terminal device. Both the terminal device and a core network device may learn of the TA of the terminal device. The TA is configured at a cell level. A same TA may be configured for a plurality of cells, and one cell belongs to only one TA. Each TA may be indicated by using a tracking area code (tracking area code, TAC).
(2) Registration area (registration area, RA): is a range determined by the core network device for the terminal device during registration of the terminal device. A core network may track the terminal device within the RA. The RA may include one or more TAs, and each RA may be indicated by using one or more TACs of the one or more TAs included within the RA. For example, RA={TAC #1, TAC #2}, to indicate that the RA includes a TA identified by the TAC #1 and a TA identified by the TAC #2. In an implementation, the core network device may indicate the RA of the terminal device by using a registration accept (registration accept) message sent to the terminal device.
(3) Slice (slice): is also referred to as a network slice (network slice). A physical network can be abstracted into a plurality of slices. Each slice forms an end-to-end logical subnet, and different slices are logically isolated from each other. Each slice may flexibly provide one or more network services as required, without affecting other slices.

Different logical subnets may be identified and distinguished by using S-NSSAI. Each piece of S-NSSAI may include at least one of the following: a slice/service type (slice/service type, SST) and a slice differentiator (slice differentiator, SD). The SST may indicate a specific feature and service type of a slice. As a supplement to the SST, the SD may further distinguish between a plurality of slice instances that meet a same SST. The SD is optional.

In this application, the S-NSSAI may indicate one slice; and NSSAI is a list (list) of S-NSSAI, and may include one or more pieces of S-NSSAI, that is, include one or more slices.

In an implementation, a type of the NSSAI may include at least one of the following (1) to (4).
(1) Requested NSSAI (Requested NSSAI): may include a slice requested by the terminal device. For example, if the requested NSSAI includes a slice #1 and a slice #2, slices requested by the terminal device are the slice #1 and the slice #2.

In an implementation, the requested NSSAI may be carried in a registration request (registration request) message.

(2) Allowed NSSAI (Allowed NSSAI): may include allowed S-NSSAI on a network side in the requested NSSAI of the terminal device. In an implementation, the allowed NSSAI may be indicated by using an allowed NSSAI (Allowed NSSAI) information element in the registration accept (registration accept) message. The allowed NSSAI may include a slice allowed within all areas in the RA for usage. For example, if the allowed NSSAI includes the slice #1, and the RA includes the TA identified by the TAC #1, a slice allowed, within the TA identified by the TAC #1, for usage is the slice #1. (3) Rejected NSSAI (Rejected NSSAI): may include rejected S-NSSAI on the network side in the requested NSSAI of the terminal device. The rejected NSSAI may include a slice rejected within all the areas in the RA for usage. For example, if the rejected NSSAI includes the slice #1, and the RA includes the TA identified by the TAC #1, a slice rejected, within the TA identified by the TAC #1, for usage is the slice #1.

In an implementation, the rejected NSSAI may be indicated by using a rejected NSSAI (Rejected NSSAI) information element in the registration accept message.

The rejected NSSAI may alternatively indicate rejected NSSAI partially in the RA (Rejected S-NSSAI(s) partially in the RA), that is, a slice rejected within a part of areas in the RA for usage. For example, if the RA includes the TA identified by the TAC #1 and the TA identified by the TAC #2, and the slice #2 is incapable of being supported by the TA identified by the TAC #1 or the slice #2 is capable of being supported only by the TA identified by the TAC #2, the rejected NSSAI partially in the RA includes the slice #2.

In an implementation, the rejected NSSAI partially in the RA may be indicated by using a rejection cause of the rejected NSSAI. For example, the rejection cause is that the NSSAI is partially rejected in the RA, and the terminal device may re-request, based on the rejected NSSAI partially in the RA, a corresponding slice service within an area that is capable of supporting the NSSAI and that is in the RA.

(4) Partially allowed NSSAI (Partially Allowed NSSAI): may include partially allowed S-NSSAI on the network side in the requested NSSAI of the terminal device. The partially allowed NSSAI may include a slice allowed within a part of areas in the RA for usage. For example, if the RA includes the TA identified by the TAC #1 and the TA identified by the TAC #2, and the slice #2 is incapable of being supported by the TA identified by the TAC #1 or the slice #2 is capable of being supported only by the TA identified by the TAC #2, the partially allowed NSSAI includes the slice #2.

In an implementation, the partially allowed NSSAI may be indicated by using a partially allowed NSSAI (Partially Allowed NSSAI) information element in the registration accept message.

In some examples, the partially allowed NSSAI and/or the rejected NSSAI partially in the RA may be used in combination with a TA list, to indicate the slice allowed and/or rejected to be used within the part of areas in the RA. The TA list may be a TA list in which the partially allowed NSSAI is capable of being supported in the RA and/or the NSSAI is partially rejected in the RA. For example, if the RA includes the TA identified by the TAC #1 and the TA identified by the TAC #2, the slice #2 is incapable of being supported by the TA identified by the TAC #1 or the slice #2 is capable of being supported only by the TA identified by the TAC #2, and the partially allowed NSSAI or the rejected NSSAI partially in the RA includes the slice #2, the TA list in which the corresponding NSSAI is capable of being supported includes the TA identified by the TAC #2. In addition, the TA list may alternatively be a TA list in which the partially allowed NSSAI is incapable of being supported in the RA and/or the NSSAI is partially rejected in the RA. In this case, in the foregoing example, if the partially allowed NSSAI or the rejected NSSAI partially in the RA includes the slice #2, the TA list in which the corresponding NSSAI is incapable of being supported includes the TA identified by the TAC #1.

In some other examples, one or more of the allowed NSSAI, the partially allowed NSSAI, and the rejected NSSAI partially in the RA may be used in combination with a service area, to indicate the slice allowed and/or rejected to be used within the part of areas in the RA. The service area may also be referred to as a network slice area of service (Network Slice Area of Service, NS-AoS), and indicates an area in which a resource is allocated or no resource is allocated to a slice in corresponding NSSAI and that is in the RA. The area may be an area determined based on a TA and a cell list. For example, if the RA includes the TA identified by the TAC #1, the TA identified by the TAC #1 includes a cell #1 to a cell #4, but no resource is allocated to the slice #2 in the cell #2, and the slice #2 belongs to the allowed NSSAI, the partially allowed NSSAI, or the rejected NSSAI partially in the RA, a service area for the slice #2 includes the cell #1, the cell #3, and the cell #4 within the TA identified by the TAC #1.

It should be understood that partially allowed NSSAI, the rejected NSSAI partially in the RA, the service area, and the like may also use other names, provided that a same function is implemented.

(4) **Session:** is a connection that is among the terminal device, an access network device, a user plane network element, and a DN and that is established by a session management network element in a mobile communication system for the terminal device, and is used for transmission of user plane data between the terminal device and the DN. The session is, for example, a PDU session.

The terminal device may establish one or more PDU sessions with the mobile communication system (for example, a 5G system), and one or more QoS flows (flows) may be established in each PDU session. Each QoS flow is used for transmission of data with a same QoS requirement (reliability or a latency) in a service. The QoS flow may be identified by a QoS flow identifier (QoS flow identifier, QFI).

(5) **Network device:** is a device located on the network side in the mobile communication system. The network device is, for example, the access network device or the core network device.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit sizes, content, orders, time sequences, application scenarios, priorities, or importance of the plurality of objects. For example, a first cell and a second cell may be a same cell, or may be different cells. In addition, the names do not indicate that the two cells have different priorities, application scenarios, importance degrees, or the like.

In embodiments of this application, "when", "in a case", and "if" may indicate a same meaning, and may be replaced with each other.

Currently, within the RA of the terminal device, different cells may provide the terminal device with services corresponding to different slices. In this way, when the terminal device moves between different cells, a session associated with a slice may need to be frequently released and/or established.

For example, as shown in FIG. 2, the RA of the terminal device includes the TA identified by the TAC #1 and the TA identified by the TAC #2. If a cell within the TA identified by the TAC #1 supports the slice #1, a cell within the TA identified by the TAC #2 supports the slice #1 and the slice #2, and the requested NSSAI of the terminal device includes the slice #1 and the slice #2, the allowed NSSAI includes the slice #1, the partially allowed NSSAI or the rejected NSSAI partially in the RA includes the slice #2, and a TA list of an area in which the slice #2 is allowed for usage and that is in the RA includes the TA identified by the TAC #2. In this case, the terminal device initiates a service request for the slice #2 in the cell within the TA identified by the TAC #2, and establishes a PDU session associated with the slice #2. Then, if the terminal device moves to the cell within the TA identified by the TAC #1, because the cell within the TA identified by the TAC #1 is incapable of supporting the slice #2, the PDU session associated with the slice #2 is released on a RAN side. If the terminal device moves from the cell within the TA identified by the TAC #1 back to the cell within the TA identified by the TAC #2, the session associated with the slice #2 may need to be established.

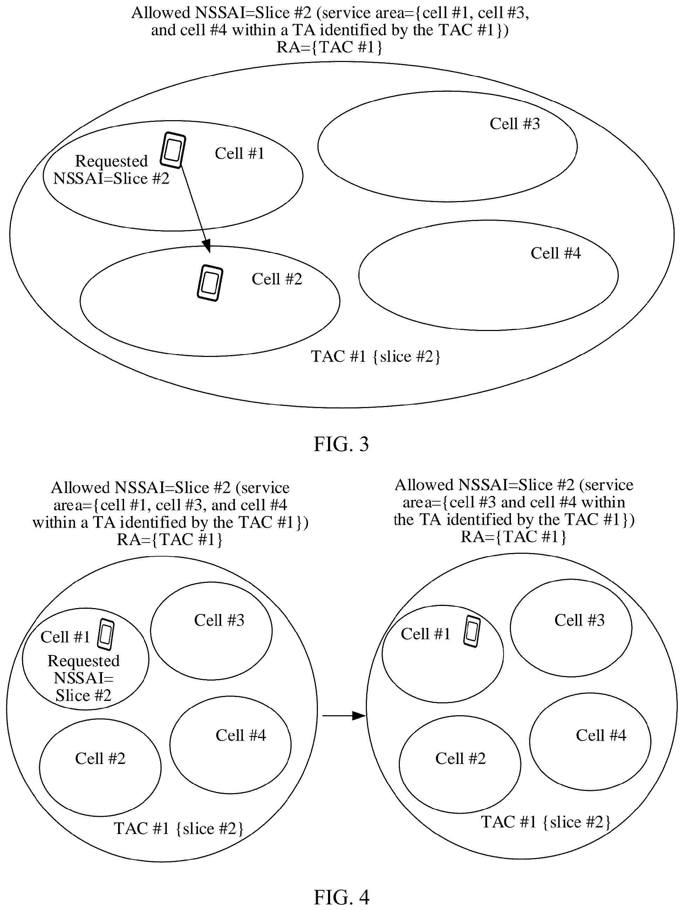

For another example, as shown in FIG. 3, the RA of the terminal device includes the TA identified by the TAC #1, and the TA identified by the TAC #1 includes the cell #1 to the cell #4. If cells within the TA identified by the TAC #1 support the slice #2, but no resource is allocated to the slice #2 in the cell #2, and the requested NSSAI of the terminal device includes the slice #2, the allowed NSSAI includes the slice #2, and the service area includes the cell #1, the cell #3, and the cell #4 within the TA identified by the TAC #1. In this case, the terminal device initiates a service request for the slice #2 within the cell #1, and establishes a PDU session associated with the slice #2. Then, if the terminal device moves to the cell #2, because no resource is allocated to the slice #2 in the cell #2, the PDU session associated with the slice #2 is released on a RAN side. If the terminal device moves from the cell #2 back to the cell #1, the session associated with the slice #2 may need to be established.

In addition, a capability of a cell that provides the terminal device with a service may also change. This may also cause frequent release and/or establishment of a session associated with a slice.

For example, as shown in FIG. 4, the RA of the terminal device includes the TA identified by the TAC #1, and the TA identified by the TAC #1 includes the cell #1 to the cell #4. If cells within the TA identified by the TAC #1 support the slice #2, but no resource is allocated to the slice #2 in the cell #2, and the requested NSSAI of the terminal device includes the slice #2, the allowed NSSAI includes the slice #2, and the service area includes the cell #1, the cell #3, and the cell #4 within the TA identified by the TAC #1. In this case, the terminal device initiates a service request for the slice #2 within the cell #1, and establishes a PDU session associated with the slice #2. Then, if no resource is allocated to the slice #2 in the cell #1, the PDU session associated with the slice #2 is released on a RAN side. Subsequently, if a resource is allocated to the slice #2 in the cell #1, the session associated with the slice #2 may need to be established.

It should be understood that the foregoing scenario is merely an example. In another scenario, a session associated with a slice may be frequently released and/or established because a capability of a cell that provides the terminal device with a service changes. For example, in the example shown in FIG. 4, if the allowed NSSAI is replaced with the partially allowed NSSAI or the rejected NSSAI partially in the RA, a similar problem also occurs.

Therefore, how to avoid the frequent release and/or establishment of the session associated with the slice needs to be further studied.

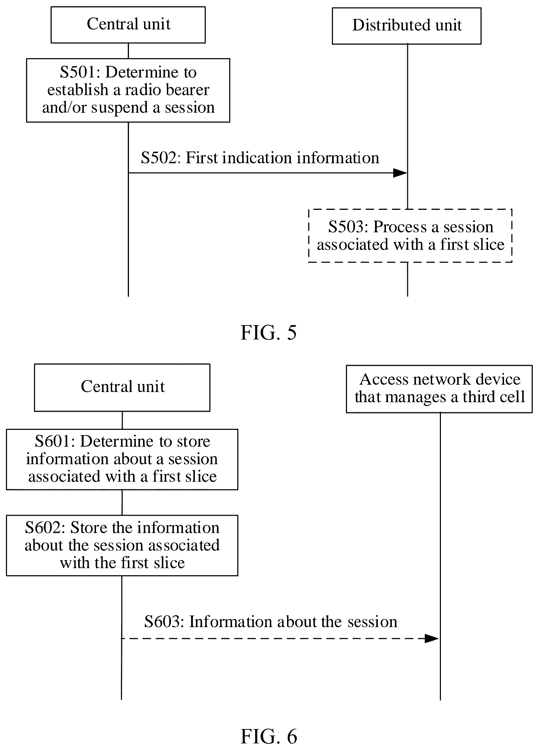

FIG. 5 is a diagram of a communication method according to an embodiment of this application. The method may be applied to the communication system shown in FIG. 1. The method includes the following steps.

S501: A central unit determines to establish a radio bearer (for example, a data radio bearer (data radio bearer, DRB)) corresponding to a session (for example, a PDU session) associated with a first slice and/or suspend the session associated with the first slice.

A first cell managed by the central unit may be a cell (for example, a serving cell of a terminal device) that is providing the terminal device with a service, or may be a cell (for example, a target cell of the terminal device) that is to provide the terminal device with a service.

In this application, the first cell managed by the central unit is incapable of providing the terminal device with a service corresponding to the first slice, and the first cell is within an RA of the terminal device. The first slice belongs to a first slice set, and the first slice set includes a slice allowed within all or a part of areas in the RA for usage and/or a slice rejected within a part of areas in the RA for usage. The slice allowed within all areas in the RA for usage includes, for example, a slice included in allowed NSSAI of the terminal device. For specific content, refer to the descriptions of the allowed NSSAI in the term description part. The slice allowed or rejected to be used within the part of areas in the RA includes, for example, a slice included in partially allowed NSSAI and/or rejected NSSAI partially in the RA. For specific content, refer to the descriptions of the slice in the term description part.

In an implementation, the central unit may perform S501 in one of the following scenarios.

Scenario 1: The terminal device moves from a second cell to the first cell, where the second cell is capable of providing the terminal device with the service corresponding to the first slice, and is within the RA of the terminal device.

That the terminal device moves from a second cell to the first cell may be that the terminal device is handed over from the second cell to the first cell, or may be that the terminal device is reselected from the second cell to the first cell. When the terminal device is handed over from the second cell to the first cell, within the second cell before the handover, the session associated with the first slice may be in an active state. When the terminal device is reselected from the second cell to the first cell, within the second cell before the reselection, the session associated with the first slice may be in an active state, or may be in an inactive (inactive) state.

In some examples, Scenario 1 may be shown in FIG. 2. The RA of the terminal device includes a TA identified by a TAC #1 and TA identified by a TAC #2. The TA identified by the TAC #1 supports a slice #1, and the TA identified by the TAC #2 supports the slice #1 and a slice #2. The second cell may be a cell in the TA identified by the TAC #2, the first cell may be a cell in the TA identified by the TAC #1, and the first slice is the slice #2.

In some other examples, Scenario 1 may be shown in FIG. 3. The RA of the terminal device includes a TA identified by a TAC #1. The TA identified by the TAC #1 includes a cell #1 to a cell #4. Cells within the TA identified by the TAC #1 support a slice #2, but no resource is allocated to the slice #2 in the cell #2. The second cell may be the cell #1, the first cell may be the cell #2, and the first slice is the slice #2.

Scenario 2: A resource allocated in the first cell to the first slice is limited. For example, no resource is allocated to the first slice in the first cell.

For example, Scenario 2 may be shown in FIG. 4. The RA of the terminal device includes a TA identified by a TAC #1. The TA identified by the TAC #1 includes a cell #1 to a cell #4. Cells within the TA identified by the TAC #1 support a slice #2, but no resource is allocated to the slice #2 in the cell #2. When the cell #1 provides the terminal device with a service corresponding to the slice #2, if a resource allocated in the cell #1 to the slice #2 is limited, for example, if no resource is allocated to the slice #2 in the cell #1, the first cell is the cell #1, and the first slice is the slice #2.

S502: The central unit sends first indication information to a distributed unit, and correspondingly, the distributed unit receives the first indication information from the central unit.

The first indication information may indicate the distributed unit to establish the radio bearer corresponding to the session associated with the first slice, and/or indicate the distributed unit to suspend the session.

In some examples, in S501, the central unit determines to establish the radio bearer corresponding to the session associated with the first slice, and the first indication information may indicate the distributed unit to establish the radio bearer, and/or indicate the distributed unit to suspend the session.

In some other examples, in S501, the central unit determines to suspend the session associated with the first slice, and the first indication information may indicate the distributed unit to suspend the session. In an implementation, if the radio bearer corresponding to the session associated with the first slice is not established currently in the first cell, the first indication information may further indicate the distributed unit to establish the radio bearer.

In still some other examples, in S501, the central unit determines to establish the radio bearer corresponding to the session associated with the first slice and suspend the session. The first indication information may indicate the distributed unit to establish the radio bearer, and indicate the distributed unit to suspend the session.

In an implementation, the radio bearer that the first indication information indicates to establish may be a radio bearer that is for the terminal device and that corresponds to the session associated with the first slice, or may be a radio bearer for the first slice. The session that the first indication information indicates to suspend may be a session that is for the terminal device and that is associated with the first slice, or may be a session for the first slice. The radio bearer and/or the session for the first slice may correspond to one or more terminal devices. In an implementation, when the first indication information indicates to establish the radio bearer that is for the terminal device and that corresponds to the session associated with the first slice and/or suspend the session that is for the terminal device and that is associated with the first slice, the first indication information may be carried in F1 application protocol (F1 Application Protocol, F1AP) signaling related to the terminal device. When the first indication information indicates to establish the radio bearer for the first slice and/or suspend the session for the first slice, the first indication information may be carried in F1AP signaling unrelated to the terminal device.

The first indication information may be carried in an existing message, or may be carried in a new message. This is not limited in this application.

According to the method, when the first cell is incapable of providing the terminal device with the service corresponding to the first slice, the central unit that manages the first cell may indicate the distributed unit to establish the radio bearer corresponding to the session associated with the first slice and/or suspend the session, instead of releasing the session, so that frequent release and/or establishment of the session associated with the first slice can be avoided, thereby reducing signaling overheads between the terminal device and a network device caused by the frequent release and/or establishment of the session associated with the first slice, and reducing power consumption of the terminal device.

In some possible manners, the method shown in FIG. 5 further includes the following step.

S503: The distributed unit processes, based on the first indication information, the session associated with the first slice.

In an implementation, the processing performed by the distributed unit on the session is described with reference to the following implementation 1 to implementation 4.

**Implementation 1: The distributed unit suspends, based on the first indication information, the session associated with the first slice.**

In Implementation 1, the first indication information may indicate the distributed unit to establish the radio bearer corresponding to the session, and/or indicate the distributed unit to suspend the session. After receiving the first indication information, the distributed unit may suspend the session. Optionally, if the radio bearer corresponding to the session has not been established when the first indication information is received, the distributed unit may first establish the radio bearer, and then suspend the session. A specific process in which the distributed unit establishes the radio bearer is not limited in this application.

That the distributed unit suspends the session may include: The distributed unit removes a TNLA associated with the session. The TNLA may be used to transmit user plane data on an F1 interface. In some examples, when the first indication information indicates to establish the radio bearer that is for the terminal device and that corresponds to the session associated with the first slice and/or suspend the session that is for the terminal device and that is associated with the first slice, the distributed unit may remove a TNLA that is for the terminal device and that is associated with the session associated with the first slice. In some other examples, when the first indication information indicates to establish the radio bearer for the first slice and/or suspend the session for the first slice, the distributed unit may remove a TNLA that is associated with the first slice and that is associated with one or more sessions.

In some possible manners, that the distributed unit suspends the session may further include: The distributed unit stores TNL information associated with the session. The TNL information may include an upper-layer logical configuration associated with the session, for example, include a TNL address and/or a tunnel endpoint identifier (Tunnel Endpoint Identifier, TEID) of a general packet radio service (general packet radio service, GPRS) tunneling protocol for the user plane (GPRS Tunneling Protocol for the user plane, GTP-U) tunnel. In this way, when the session needs to be resumed, the distributed unit may quickly resume the session based on the TNL information.

In some other possible manners, after the distributed unit removes the TNLA associated with the session, if the session needs to be resumed, the distributed unit may quickly resume the session based on at least one piece of pre-obtained TNL information. For example, the distributed unit pre-obtains at least one TNL address associated with the session. When the session needs to be resumed, the distributed unit may select one TNL address from at least one piece of TNL address information to resume the session.

In Implementation 1, when the first cell is incapable of providing the terminal device with the service corresponding to the first slice, the distributed unit that manages the first cell may suspend the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In an implementation, in Implementation 1, the method shown in FIG. 5 further includes step A1.

**Step A1:** The central unit suspends the session.

In some possible manners, in S501, the central unit determines to suspend the session associated with the first slice. The central unit may then suspend the session. For specific content of suspending the session by the central unit, refer to the descriptions of suspending the session by the distributed unit in S503. Only the distributed unit is replaced with the central unit, and details are not described herein again.

In some other possible manners, after establishing the radio bearer corresponding to the session associated with the first slice and/or suspending the session, the distributed unit may send first feedback information to the central unit. The first feedback information indicates that the distributed unit successfully establishes the radio bearer and/or successfully suspends the session. The central unit may suspend the session after receiving the first feedback information.

According to the method, when the first cell is incapable of providing the terminal device with the service corresponding to the first slice, the central unit that manages the first cell may suspend the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

**Implementation 2: The distributed unit establishes, based on the first indication information, the radio bearer corresponding to the session associated with the first slice, but skips scheduling a resource on the radio bearer.**

In Implementation 2, the first indication information may indicate the distributed unit to establish the radio bearer corresponding to the session. After receiving the first indication information, the distributed unit may establish the radio bearer.

In some possible manners, the distributed unit may skip scheduling the resource on the radio bearer based on an indication of the central unit. For example, the central unit sends second indication information to the distributed unit, where the second indication information indicates the distributed unit not to schedule the resource on the radio bearer. In this way, after receiving the second indication information, the distributed unit skips scheduling the resource on the radio bearer.

It should be understood that the second indication information and the first indication information may be included in a same message, or may be included in different messages. This is not limited in this application. When the second indication information and the first indication information are included in the same message, a speed of indicating the distributed unit not to schedule the resource on the radio bearer can be improved.

In this manner, the central unit may indicate, based on the second indication information, the distributed unit not to schedule the resource on the radio bearer, to accurately indicate an operation of the distributed unit. This avoids a case in which the distributed unit fails to schedule the resource on the radio bearer because the service corresponding to the first slice cannot be provided.

In some other possible manners, after establishing the radio bearer corresponding to the session associated with the first slice, the distributed unit may determine, based on a slice list (slice list) supported by the first cell and/or a slice available capacity (slice available capacity) of the first cell, that the distributed unit is incapable of scheduling the resource on the radio bearer. The slice list supported by the first cell may include indication information (for example, an identifier) of a slice supported by the first cell. The slice available capacity of the first cell may include indication information indicating a percentage of an available resource of each slice supported by the first cell in a total resource. For example, if the slice list supported by the first cell does not include the first slice, the distributed unit may determine that the distributed unit is incapable of scheduling the resource on the radio bearer. For another example, if determining, based on the slice available capacity of the first cell, that the resource allocated to the first slice is limited, the distributed unit may determine that the distributed unit is incapable of scheduling the resource on the radio bearer.

In an implementation, after determining that the distributed unit is incapable of scheduling the resource on the radio bearer, the distributed unit may send third indication information to the central unit, where the third indication information indicates that the distributed unit is incapable of scheduling the resource on the radio bearer. In this way, the central unit may effectively manage the distributed unit based on the third indication information.

In Implementation 2, when the first cell is incapable of providing the terminal device with the service corresponding to the first slice, the distributed unit that manages the first cell establishes the radio bearer corresponding to the session associated with the first slice, but skips scheduling the resource on the radio bearer, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device. In addition, the distributed unit skips scheduling the resource on the radio bearer, so that unnecessary occupation of the resource on the radio bearer can be avoided, thereby improving resource utilization efficiency.

**Implementation 3: The distributed unit skips establishing, based on the first indication information, the radio bearer corresponding to the session associated with the first** slice.

In Implementation 3, the first indication information may indicate the distributed unit to establish the radio bearer, and/or indicate the distributed unit to suspend the session. After receiving the first indication information, the distributed unit may not establish the radio bearer. In an implementation, the distributed unit may determine, based on a slice list supported by the first cell and/or a slice available capacity of the first cell, that the distributed unit skips establishing the radio bearer. For specific content of the slice list supported by the first cell and the slice available capacity of the first cell, refer to Implementation 2. Details are not described herein again. For example, after the first indication information is received, if the slice list supported by the first cell does not include the first slice, or the distributed unit determines, based on the slice available capacity of the first cell, that the resource allocated to the first slice is limited, the distributed unit may skip establishing the radio bearer.

In Implementation 3, when the first cell is incapable of providing the terminal device with the service corresponding to the first slice, the distributed unit that manages the first cell may not establish the radio bearer corresponding to the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

**Implementation 4: The distributed unit establishes, based on the first indication information, the radio bearer corresponding to the session associated with the first slice.**

In Implementation 4, the method shown in FIG. 5 further includes step B1 and step B2.

**Step B1:** The central unit sets, to a value less than a packet length of a single to-be-transmitted data packet, a value of a first maximum bit rate corresponding to the first slice. For example, the central unit may set the value of the first maximum bit rate to 0.

In an implementation, the first maximum bit rate may include an MBR of the first slice and/or an AMBR of the session associated with the first slice. The MBR is, for example, a slice-MBR (slice-MBR), and the AMBR is, for example, a PDU session-AMBR (PDU session-AMBR). The MBR of the first slice and/or the AMBR of the session may be included in a QoS parameter or a PDU session parameter.

**Step B2:** The central unit sends the first maximum bit rate to the distributed unit. Because the value of the first maximum bit rate is less than the value of the packet length of the single to-be-transmitted data packet, the distributed unit does not use the radio bearer corresponding to the session associated with the first slice to perform data transmission.

It should be understood that the first maximum bit rate and the first indication information may be included in a same message, or may be included in different messages. This is not limited in this application.

In Implementation 4, when the first cell is incapable of providing the terminal device with the service corresponding to the first slice, the distributed unit that manages the first cell may establish the radio bearer corresponding to the session associated with the first slice, instead of releasing the session, so that the frequent release and/or establishment of the session associated with the first slice can be avoided, thereby reducing signaling overheads between the terminal device and the network device caused by the frequent release and/or establishment of the session associated with the first slice. In addition, the central unit sets, to the value less than the packet length of the single to-be-transmitted data packet, the value of the first maximum bit rate corresponding to the first slice. In this way, the distributed unit cannot perform data transmission by using the radio bearer corresponding to the session associated with the first slice, thereby avoiding unnecessary occupation of the resource on the radio bearer, and improving resource utilization efficiency.

In an implementation, in Implementation 4, the central unit may further store a second maximum bit rate corresponding to the first slice, where the second maximum bit rate is a maximum bit rate that is from a core network device (for example, an AMF) and that corresponds to the first slice. For example, the second maximum bit rate may include an MBR of the first slice and/or an AMBR of the session associated with the first slice.

The following uses examples to describe a manner in which the central unit obtains the second maximum bit rate.

In some examples, the central unit may obtain the second maximum bit rate from another access network device. For example, in Scenario 1 above, when the terminal device moves from the second cell to the first cell, the central unit may obtain the second maximum bit rate from an access network device that manages the second cell.

In some other examples, the central unit may obtain the second maximum bit rate stored in the central unit. For example, in Scenario 2 above, when the resource allocated in the first cell for the first slice is limited, the central unit may obtain the second maximum bit rate stored in the central unit. For another example, in Scenario 1 above, when the terminal device moves from the second cell to the first cell, the central unit manages the first cell and the second cell, and the central unit may obtain the second maximum bit rate stored in the central unit.

According to the method, when the terminal device moves from the first cell to a third cell, the central unit may send the second maximum bit rate to an access network device that manages the third cell; or when the resource allocated in the first cell to the first slice is no longer limited, the central unit may send the second maximum bit rate to the distributed unit. In this way, a network side can quickly resume the session associated with the first slice.

That the terminal device moves from the first cell to a third cell may be that the terminal device is handed over from the first cell to the third cell, or may be that the terminal device is reselected from the first cell to the third cell. The third cell and the foregoing second cell may be a same cell, or may be different cells.

In an implementation, the third cell is capable of providing the terminal device with the service corresponding to the first slice, and the third cell is within the RA of the terminal device.

**With reference to Implementation 1 to Implementation 3, the following describes a possible implementation of determining to establish the radio bearer and/or suspend the session in S501.**

**Implementation 1: The central unit determines, based on fourth indication information from a first access network device, to establish the radio bearer corresponding to the session associated with the first slice and/or suspend the session.** The first access network device manages the second cell, and the second cell is capable of providing the terminal device with the service corresponding to the first slice, and is within the RA of the terminal device.

In an implementation, Implementation 1 includes step C1 and step C2.

**Step C1:** When the terminal device moves from the second cell to the first cell, the first access network device sends the fourth indication information to the central unit. Correspondingly, the central unit receives the fourth indication information from the first access network device.

The fourth indication information may indicate that the central unit accepts the session. In other words, the fourth indication information may indicate that the central unit agrees to admit the session. The fourth indication information may be included in an existing message (for example, a handover request message), or may be included in a new message. This is not limited in this application.

In an implementation, when the terminal device moves from the second cell to the first cell, the first access network device may send the fourth indication information to the central unit based on the fourth information. The fourth information may be used to determine that a condition #1 is met, and the condition #1 includes a condition #1-1: the first cell is incapable of providing the terminal device with the service corresponding to the first slice, the first cell and the second cell are capable of providing the terminal device with a service corresponding to a second slice, and the first slice set includes the first slice and the second slice; or a condition 1-2: the first cell supports the first slice, but is incapable of providing the terminal device with the service corresponding to the first slice, the second cell is capable of providing the terminal device with the service corresponding to the first slice, and the first slice set includes the first slice. In other words, when the terminal device moves from the second cell to the first cell, if the first access network device determines that the condition #1 is met, the first access network device sends the fourth indication information to the central unit.

For example, the fourth information includes at least one of the following: the partially allowed NSSAI of the terminal device, the rejected NSSAI partially in the RA, the allowed NSSAI of the terminal device, the slice list supported by the first cell, a slice list supported by the second cell, or the slice available capacity of the first cell. For specific content of the slice list supported by the first cell and the slice available capacity of the first cell, refer to Implementation 2. Details are not described herein again. The slice list supported by the second cell may include indication information (for example, an identifier) of a slice supported by the second cell. The slice list supported by the first cell and the slice available capacity of the first cell may be obtained by the first access network device from the central unit. The slice list supported by the second cell may be locally stored by the first access network device. The partially allowed NSSAI, the rejected NSSAI partially in the RA, and the allowed NSSAI may be obtained by the first access network device from the terminal device or the core network device (for example, the AMF).

The following uses examples to describe a manner in which the first access network device determines, based on the fourth information, that the condition #1 is met.

For example, the fourth information includes the partially allowed NSSAI of the terminal device, the allowed NSSAI of the terminal device, the slice list supported by the first cell, and the slice list supported by the second cell. If the partially allowed NSSAI includes the first slice, the allowed NSSAI includes the second slice, the slice list supported by the first cell includes the second slice but does not include the first slice, and the slice list supported by the second cell includes the first slice and the second slice, the first access network device may determine that the condition #1-1 is met.

For another example, the fourth information includes the allowed NSSAI of the terminal device, the slice list supported by the first cell, the slice list supported by the second cell, and the slice available capacity supported by the first cell. If the allowed NSSAI of the terminal device includes the first slice and the second slice, the slice list supported by the first cell includes the first slice and the second slice, but the slice available capacity of the first cell for the first slice is 0, and the slice list supported by the second cell includes the first slice and the second slice, the first access network device may determine that the condition #1-1 is met.

For still another example, the fourth information includes the allowed NSSAI of the terminal device, the slice list supported by the first cell, the slice list supported by the second cell, and the slice available capacity supported by the first cell. If the allowed NSSAI of the terminal device includes the first slice, the slice list supported by the first cell includes the first slice, but the slice available capacity of the first cell for the first slice is 0, and the slice list supported by the second cell includes the first slice, the first access network device may determine that the condition #1-2 is met.

Step C2: The central unit determines, based on the fourth indication information, to establish the radio bearer and/or suspend the session.

If receiving the fourth indication information, the central unit may determine to establish the radio bearer and/or suspend the session.

In this implementation, when the terminal device moves from the second cell to the first cell, and the first cell is incapable of providing the terminal device with the service corresponding to the first slice, the first access network device that manages the second cell may indicate the central unit to establish the radio bearer corresponding to the session associated with the first slice and/or suspend the session, so that the frequent release and/or establishment of the session associated with the first slice can be avoided, thereby reducing signaling overheads between the terminal device and the network device caused by the frequent release and/or establishment of the session associated with the first slice, and reducing power consumption of the terminal device.

In some possible implementations, the fourth indication information in Implementation 1 may be replaced with indication information #1, and the indication information #1 may indicate the central unit to establish the radio bearer and/or suspend the session. In this way, after receiving the indication information #1, the central unit may determine to establish the radio bearer and/or suspend the session.

In an implementation, in Implementation 1, the first access network device and the central unit may be a same device. For example, the central unit manages the first cell and the second cell. In this case, when determining that the condition #1 is met, the central unit may determine to establish the radio bearer and/or suspend the session. For a manner in which the central unit determines that the condition #1 is met, refer to the descriptions of a case in which the first access network device determines that the condition #1 is met. Details are not described herein again.

**Implementation 2: The central unit determines, based on first information from the core network device, to establish the radio bearer corresponding to the session associated with the first slice and/or suspend the session. The core network device is, for example, the** AMF.

In an implementation, Implementation 2 may include steps D1 and D2.

**Step D1:** The core network device sends the first information to the central unit, and correspondingly, the central unit receives the first information from the core network device. The first information is used by the central unit to determine to establish the radio bearer and/or suspend the session.

In some examples, the first information may indicate the central unit to establish the radio bearer and/or suspend the session. In this way, when receiving the first information, the central unit may determine to establish the radio bearer and/or suspend the session.

In some other examples, the first information is used to determine that a first condition is met. The first condition may include: The first slice set includes the first slice. The first condition is used by the central unit to determine to establish the radio bearer and/or suspend the session. Specific content in which the first information is used to determine that the first condition is met is described in step D2. Details are not described herein.

In an implementation, the first information may include at least one of the following: the partially allowed NSSAI of the terminal device, the rejected NSSAI partially in the RA, or the allowed NSSAI of the terminal device. The first information may be information locally stored by the core network device.

**Step D2:** The central unit determines, based on the first information, to establish the radio bearer and/or suspend the session.

In an implementation, when determining, based on the first information, that the first condition is met, the central unit may determine to establish the radio bearer and/or suspend the session. For example, if one or more of the partially allowed NSSAI of the terminal device, the allowed NSSAI, or the rejected NSSAI partially in the RA include the first slice, the central unit may determine that the first slice belongs to the first slice set, that is, determine that the first condition is met.

In this implementation, when the first cell is incapable of providing the terminal device with the service corresponding to the first slice, the core network device may indicate the central unit to establish the radio bearer corresponding to the session associated with the first slice and/or suspend the session, so that the frequent release and/or establishment of the session associated with the first slice can be avoided, thereby reducing signaling overheads between the terminal device and the network device caused by frequent release and/or establishment of the session associated with the first slice, and reducing power consumption of the terminal device.

In some possible manners, in step D1, after determining to establish the radio bearer corresponding to the session associated with the first slice and/or suspend the session, the core network device may send the first information to the central unit. With reference to Manner 1 and Manner 2, the following describes a case in which the core network device determines to establish the radio bearer and/or suspend the session.

**Manner 1: The core network device determines, based on second information from the central unit, to establish the radio bearer and/or suspend the session.**

In an implementation, Manner 1 includes step E1 and step E2.

**Step E1:** The central unit sends the second information to the core network device, and correspondingly, the core network device receives the second information from the central unit. The second information is used by the core network device to determine to establish the radio bearer and/or suspend the session.

For example, the second information includes one of the following: information indicating that the session fails to be established; and information indicating that the session is successfully admitted.

In an implementation, the second information further includes fourth indication information, and the fourth indication information indicates that the central unit accepts the session. For specific content of the fourth indication information, refer to step C1.

The following uses examples to describe a manner in which the central unit obtains the fourth indication information.

In some examples, in Scenario 1 above, when the terminal device moves from the second cell to the first cell, the central unit may obtain the fourth indication information from the first access network device that manages the second cell.

In some other examples, in Scenario 1 above, when the terminal device moves from the second cell to the first cell, if the central unit manages the first cell and the second cell, the central unit may generate the fourth indication information.

In still some other examples, in Scenario 2 above, when the resource allocated in the first cell to the first slice is limited, the central unit that manages the first cell may generate the fourth indication information.

**Step E2:** The core network device determines to establish the radio bearer corresponding to the session associated with the first slice and/or suspend the session.

With reference to Implementation 1 to Implementation 3, the following describes a case in which the core network device determines to establish the radio bearer corresponding to the session associated with the first slice and/or suspend the session.

In Implementation 1, the second information includes the fourth indication information. The core network device determines, based on the fourth indication information, to establish the radio bearer and/or suspend the session. Specifically, after receiving the fourth indication information, the core network device may determine to establish the radio bearer and/or suspend the session.

In Implementation 2, the core network device determines, based on third information, to establish the radio bearer and/or suspend the session. The third information is used to determine that a condition #2 is met. The condition #2 includes: The first cell is incapable of providing the terminal device with the service corresponding to the first slice, the first cell is within the RA, and the first slice set includes the first slice. When the condition #2 is met, a core network device may determine to establish the radio bearer and/or suspend the session.

In an implementation, the third information includes at least one of the following: the partially allowed NSSAI of the terminal device, the rejected NSSAI partially in the RA, the allowed NSSAI of the terminal device, information indicating the RA, a TA list in which the partially allowed NSSAI is capable or incapable of being supported in the RA, a TA list in which the rejected NSSAI partially in the RA is capable or incapable of being supported in the RA, service area information of the allowed NSSAI capable or incapable of being supported in the RA, service area information of the partially allowed NSSAI capable or incapable of being supported in the RA, service area information of the rejected NSSAI partially in the RA capable or incapable of being supported in the RA, a cell identity of the first cell, or a TA to which the first cell belongs.

The following uses examples to describe a manner in which the core network device determines, based on the third information, whether the condition #2 is met.

For example, the third information includes the partially allowed NSSAI of the terminal device, the information indicating the RA, the TA list in which the partially allowed NSSAI is capable of being supported in the RA, and the TA to which the first cell belongs. The partially allowed NSSAI includes the first slice, the TA list in which the partially allowed NSSAI is capable of being supported in the RA includes the TA identified by the TAC #2, and the TA to which the first cell belongs is the TA identified by the TAC #1. If the RA includes the TA identified by the TAC #1 and the TA identified by the TAC #2, the core network device may determine that the condition #2 is met. If the RA includes only the TA identified by the TAC #2, the core network device may determine that the condition #2 is not met.

For another example, the third information includes the rejected NSSAI partially in the RA, the information indicating the RA, the TA list in which the rejected NSSAI partially in the RA is capable of being supported in the RA, and the TA to which the first cell belongs. The rejected NSSAI partially in the RA includes the first slice, the TA list in which the rejected NSSAI partially in the RA is capable of being supported in the RA includes the TA identified by the TAC #2, and the TA to which the first cell belongs is the TA identified by the TAC #1. If the RA includes the TA identified by the TAC #1 and the TA identified by the TAC #2, the core network device may determine that the condition #2 is met. If the RA includes only the TA identified by the TAC #2, the core network device may determine that the condition #2 is not met.

For still another example, the third information includes the rejected NSSAI partially in the RA, the information indicating the RA, the TA list in which the rejected NSSAI partially in the RA is incapable of being supported in the RA, and the TA to which the first cell belongs. The rejected NSSAI partially in the RA includes the first slice, the TA list in which the rejected NSSAI partially in the RA is incapable of being supported in the RA includes the TA identified by the TAC #1, and the TA to which the first cell belongs is the TA identified by the TAC #1. If the RA includes the TA identified by the TAC #1 and the TA identified by the TAC #2, the core network device may determine that the condition #2 is met. If the RA includes only the TA identified by the TAC #2, the core network device may determine that the condition #2 is not met.

For still another example, the third information includes the allowed NSSAI of the terminal device, the information indicating the RA, the service area information of the allowed NSSAI capable of being supported in the RA, and the cell identity of the first cell. The allowed NSSAI of the terminal device includes the first slice. The RA includes the TA identified by the TAC #1. If the service area information of the allowed NSSAI capable of being supported in the RA includes a cell identity of a cell other than the first cell in the TA identified by the TAC #1, the core network device may determine that the condition #2 is met. If the service area information of the allowed NSSAI capable of being supported in the RA includes the cell identity of the first cell in the TA identified by the TAC #1, the core network device may determine that the condition #2 is not met. It should be understood that this example is merely an example. The rejected NSSAI partially in the RA or the partially allowed NSSAI may alternatively be combined with the service area information, to indicate an area in which a resource is allocated or no resource is allocated to a slice in the corresponding NSSAI in the RA, to determine whether the condition #2 is met.

In an implementation, in Implementation 2, if the second information includes the fourth indication information, but the core network device determines, based on the third information, that the condition #2 is not met, the core network device determines not to establish the radio bearer and/or suspend the session.

In Implementation 3, the second information includes information indicating that the session fails to be established. If the core network device determines that a condition #3 is met, the core network device determines to establish the radio bearer and/or suspend the session. The condition #3 includes a condition #3-1: a status of the session within the second cell is an active state, and the first slice belongs to the first slice set; and/or a condition #3-2: the status of the session within the second cell is the active state, and both the first cell and the second cell are within the RA.

The second cell is a cell that provides the terminal device with the service before the core network device determines to establish the radio bearer and/or suspend the session. The first cell and the second cell may be the same or may be different. For example, in Scenario 1 above, when the terminal device moves from the second cell to the first cell, the second cell is a cell that provides the terminal device with the service before the movement. For another example, in Scenario 2 above, the resource allocated in the first cell to the first slice is limited, and the second cell is the first cell.

The following uses examples to describe a manner in which the core network device determines that the condition #3 is met.

For example, the core network device may determine, based on the first slice set and the status of the session within the second cell, that the condition #3-1 is met. For example, if the session associated with the first slice fails to be established within the first cell, the first slice belongs to the first slice set, and the status of the session within the second cell is the active state, the core network device may determine that the condition #3-1 is met.

For another example, the core network device may determine, based on the RA of the terminal device and the status of the session within the second cell, that the condition #3-2 is met. For example, if the RA of the terminal device includes the TA identified by the TAC #1 and the TA identified by the TAC #2, the first cell belongs to the TA identified by the TAC #1, the second cell belongs to the TA identified by the TAC #2, the session associated with the first slice fails to be established within the first cell, and the status of the session within the second cell is the active state, the core network device may determine that the condition #3-2 is met.

**Manner 2: When the terminal device moves from the second cell to the first cell, the core network device determines, based on fifth information from the first access network device that manages the second cell, to establish the radio bearer and/or suspend the session.**

In an implementation, Manner 2 includes step F1 and step F2.

**Step F1:** When the terminal device moves from the second cell to the first cell, the first access network device sends the fifth information to the core network device. Correspondingly, the core network device receives the fifth information from the first access network device. The fifth information is used by the core network device to determine to establish the radio bearer and/or suspend the session.

In an implementation, the fifth information includes an identifier of the session. The fifth information may be carried in an existing message (a handover required (handover required) message), or may be carried in a new message. This is not limited in this application.

**Step F2:** The core network device determines to establish the radio bearer corresponding to the session associated with the first slice and/or suspend the session.

For specific content of step F2, refer to Implementation 2 and Implementation 3 of step E2. Details are not described herein again.

**Implementation 3: The central unit determines, based on sixth indication information from the terminal device, to establish the radio bearer corresponding to the session associated with the first slice and/or suspend the session.**

In an implementation, Implementation 3 may include step G1 and step G2.

**Step G1:** The terminal device sends the sixth indication information to the central unit, and correspondingly, the central unit receives the sixth indication information from the terminal device. The sixth indication information may indicate to establish the radio bearer and/or suspend the session.

In some possible manners, after determining to establish the radio bearer and/or suspend the session, the terminal device may send the sixth indication information to the central unit.

In some examples, the terminal device may determine, based on third information, to establish the radio bearer and/or suspend the session. For specific content of the third information, refer to step E2. For a manner in which the terminal device determines to establish the radio bearer and/or suspend the session, refer to the descriptions of a case in which the core network device determines to establish the radio bearer and/or suspend the session in Implementation 2 of step E2. Only the core network device is replaced with the terminal device, and details are not described herein again.

In some other examples, when the terminal device perceives that the session is released and determines that the condition #3 is met, the terminal device may determine to establish the radio bearer and/or suspend the session. For specific content of a case in which the terminal device determines that the condition #3 is met, refer to the descriptions of a case in which the core network device determines that the condition #3 is met in Implementation 3 of step E2. Only the core network device is replaced with the terminal device, and details are not described herein again.

**Step G2:** The central unit determines, based on the sixth indication information, to establish the radio bearer and/or suspend the session.

If receiving the sixth indication information, the central unit may determine to establish the radio bearer and/or suspend the session.

In an implementation, the terminal device or the central unit further sends the sixth indication information to the core network device, so that the core network device establishes the radio bearer and/or suspends the session.

In this application, the sixth indication information may be carried in an existing message, or may be carried in a new message. This is not limited in this application.

In this implementation, when the first cell is incapable of providing the terminal device with the service corresponding to the first slice, the terminal device may indicate the central unit to establish the radio bearer corresponding to the session associated with the first slice and/or suspend the session, so that the frequent release and/or establishment of the session associated with the first slice can be avoided, thereby reducing signaling overheads between the terminal device and the network device caused by frequent release and/or establishment of the session associated with the first slice, and reducing power consumption of the terminal device.

In an implementation, the method shown in FIG. 5 may further include step H1.

**Step H1:** The terminal device deactivates the session associated with the first slice. In other words, the terminal device sets, to an inactive state, the status of the session associated with the first slice.

In some possible manners, the terminal device may deactivate, based on indication information #2 from the central unit, the session associated with the first slice.

In some examples, the central unit may send the indication information #2 to the terminal device, where the indication information #2 may indicate the terminal device to deactivate the session. In this way, after receiving the indication information #2, the terminal device may deactivate the session associated with the first slice.

In some other examples, the central unit may send the indication information #2 to the terminal device, where the indication information #2 may indicate that the first slice has been suspended. In this way, after receiving the indication information #2, the terminal device may deactivate the session associated with the first slice.

In some other possible manners, when determining that the condition #2 is met, the terminal device may determine to deactivate the session associated with the first slice. For specific content of a case in which the terminal device determines that the condition #2 is met, refer to the descriptions of a case in which the core network device determines, based on the third information, whether the condition # 2 is met in Implementation 2 of step E2. Only the core network device is replaced with the terminal device, and details are not described herein again.

In still some other possible manners, when perceiving that the session associated with the first slice is released, and determining that the condition #3 is met, the terminal device may determine to deactivate the session associated with the first slice. For specific content of a case in which the terminal device determines that the condition #3 is met, refer to the descriptions of a case in which the core network device determines that the condition #3 is met in Implementation 3 of step E2. Only the core network device is replaced with the terminal device, and details are not described herein again.

According to the method, the terminal device can deactivate, in a timely manner, the session associated with the first slice, to avoid using the session for data transmission, thereby reducing power consumption of the terminal device.

FIG. 6 is a diagram of another communication method according to an embodiment of this application. The method may be applied to the communication system shown in FIG. 1. The method includes the following steps.

S601: A central unit determines to store information about a session (for example, a PDU session) associated with a first slice.

A first cell managed by the central unit may be a cell (for example, a serving cell of a terminal device) that is providing the terminal device with a service, or may be a cell (for example, a target cell of the terminal device) that is to provide the terminal device with a service.

In this application, the first cell managed by the central unit is incapable of providing the terminal device with a service corresponding to the first slice, and the first cell is within an RA of the terminal device. The first slice belongs to the first slice set. For specific content of the first slice set, refer to S501 in FIG. 5. Details are not described herein again.

In an implementation, in Scenario 1 or Scenario 2 in S501 in FIG. 5, the central unit may perform S601. For specific content of Scenario 1 and Scenario 2, refer to S501 in FIG. 5. Details are not described herein again.

For example, the information about the session may include a context of the session, and the context of the session may include at least one of the following: an identifier of the session, S-NSSAI associated with the session, an AMBR of the session, uplink user plane TNL information of the session, a type of the session, or QoS information associated with the session. The QoS information associated with the session includes, for example, at least one of the following: a QoS flow identifier (QoS Flow Identifier) of the session or a QoS flow level QoS parameter (QoS Flow Level QoS Parameter) of the session.

S602: The central unit stores the information about the session associated with the first slice.

According to the method, when the first cell is incapable of providing the terminal device with the service corresponding to the first slice, the central unit that manages the first cell may store the information about the session associated with the first slice. In this way, a network side can quickly resume, based on the information about the session, the session associated with the first slice. For example, when a resource allocated in the first cell for the first slice is no longer limited, the central unit may quickly resume, based on the information about the session, the session associated with the first slice. In this way, signaling overheads between the terminal device and a network device caused by frequent release and/or establishment of the session associated with the first slice can be reduced, and power consumption of the terminal device can be reduced.

In an implementation, after S602, the terminal device may deactivate the session associated with the first slice. For specific content, refer to step H1 in FIG. 5. Repeated content is not described again. According to the method, the terminal device can deactivate, in a timely manner, the session associated with the first slice, to avoid using the session for data transmission, thereby reducing power consumption of the terminal device.

In some possible manners, the method shown in FIG. 6 further includes the following steps.

S603: When the terminal device moves from the first cell to a third cell, the central unit sends the information about the session to an access network device that manages the third cell.

That the terminal device moves from the first cell to a third cell may be that the terminal device is handed over from the first cell to the third cell, or may be that the terminal device is reselected from the first cell to the third cell. The third cell and the foregoing second cell may be a same cell, or may be different cells.

In an implementation, the third cell is capable of providing the terminal device with the service corresponding to the first slice, and the third cell is within the RA of the terminal device.

The information about the session may be carried in an existing message (for example, a handover request message), or may be carried in a new message. This is not limited in this application.

According to the method, when the terminal device moves from the first cell to the third cell, the central unit may send the information about the session to the access network device that manages the third cell, to quickly resume the session associated with the first slice. In this way, signaling overheads between the terminal device and a network device caused by frequent release and/or establishment of the session associated with the first slice can be reduced, and power consumption of the terminal device can be reduced.

With reference to Implementation a1 to Implementation a3, the following describes a possible implementation of determining to store the information about the session associated with the first slice in S601.

**Implementation a1: The central unit determines, based on fourth indication information from a first access network device, to store the information about the session associated with the first slice.** The first access network device manages the second cell, and the second cell is capable of providing the terminal device with the service corresponding to the first slice, and is within the RA of the terminal device.

In an implementation, Implementation a1 includes step I1 and step I2.

**Step I1:** When the terminal device moves from the second cell to the first cell, the first access network device sends the fourth indication information to the central unit. Correspondingly, the central unit receives the fourth indication information from the first access network device.

For specific content of step I1, refer to step C1 in FIG. 5. Details are not described herein again.

**Step I2:** The central unit determines, based on the fourth indication information, to store the information about the session associated with the first slice.

If receiving the fourth indication information, the central unit may determine to store the information about the session associated with the first slice.

In this implementation, when the terminal device moves from the second cell to the first cell, if the first cell is incapable of providing the terminal device with the service corresponding to the first slice, the first access network device that manages the second cell may indicate the central unit to store the information about the session associated with the first slice. In this way, a network side can quickly resume, based on the information of the session, the session associated with the first slice, so that signaling overheads between the terminal device and a network device caused by frequent release and/or establishment of the session associated with the first slice can be reduced, and power consumption of the terminal device can be reduced.

In some possible implementations, the fourth indication information in Implementation a1 may be replaced with indication information #3, and the indication information #3 may indicate the central unit to store the information about the session associated with the first slice. In this way, after receiving the indication information #3, the central unit may determine to store the information about the session associated with the first slice.

In an implementation, in implementation a1, the first access network device and the central unit may be a same device. For example, the central unit manages the first cell and the second cell. In this case, when determining that a condition #1 is met, the central unit may determine to store the information about the session associated with the first slice. For a manner in which the central unit determines that the condition #1 is met, refer to the descriptions of a case in which the first access network device determines that the condition #1 is met in step C1 in FIG. 5. Details are not described herein again.

**Implementation a2: The central unit determines, based on information #1 from a core network device, to store the information about the session associated with the first slice.** The core network device is, for example, an AMF.

In an implementation, Implementation a2 may include steps J1 and J2.

**Step J1**: The core network device sends the information #1 to the central unit, and correspondingly, the central unit receives the information #1 from the core network device. The information #1 is used by the central unit to determine to store the information about the session associated with the first slice.

In some examples, the information #1 may indicate the central unit to store the information about the session associated with the first slice. In this way, after receiving the information #1, the central unit may determine to store the information about the session associated with the first slice.

In some other examples, the information #1 may indicate the central unit to establish the radio bearer and/or suspend the session. When receiving the information #1, the central unit may determine to store the information about the session associated with the first slice.

In still some other examples, the information #1 is used to determine that a first condition is met. The first condition may include: The first slice set includes the first slice. The first condition is used by the central unit to determine to store the information about the session associated with the first slice. For specific content of the information #1, refer to the first information in step D1 in FIG. 5. Details are not described herein again.

In some possible manners, after determining to store the information about the session associated with the first slice, and/or determining to establish the radio bearer corresponding to the session and/or suspend the session, the core network device may send the information #1 to the central unit. For a manner in which the core network device determines to establish the radio bearer corresponding to the session and/or suspend the session, refer to step D1 in FIG. 5. A condition for determining, by the core network device, to store the information about the session associated with the first slice is the same as a condition for determining, by the core network device, to establish the radio bearer corresponding to the session associated with the first slice and/or suspend the session in step D1 in FIG. 5.

For example, the core network device receives second information from the central unit. If the second information includes fourth indication information, the core network device may determine to store the information about the session associated with the first slice. For specific content of the second information and the fourth indication information, refer to steps E1 and E2 in FIG. 5.

For another example, if determining, based on third information, that a condition #2 is met, the core network device may determine to store the information about the session associated with the first slice. For specific content of the third information, refer to step E2 in FIG. 5. For specific content of a case in which the core network device determines, based on the third information, that the condition #2 is met, refer to Implementation 2 of step E2 in FIG. 5. Details are not described herein again.

For another example, the core network device receives second information from the central unit. If the second information includes information indicating that the session fails to be established, and the core network device determines that a condition #3 is met, the core network device may determine to store the information about the session associated with the first slice. For specific content of a case in which the core network device determines that the condition #3 is met, refer to Implementation 3 of step E2 in FIG. 5. Details are not described herein again.

**Step J2:** The central unit determines, based on the information #1, to store the information about the session associated with the first slice.

In an implementation, when determining, based on the information #1, that the first condition is met, the central unit may determine to store the information about the session associated with the first slice. For specific content of a case in which the central unit determines, based on the information #1, that the first condition is met, refer to the descriptions of a case in which the central unit determines, based on the first information, that the first condition is met in step D2 in FIG. 5. Details are not described herein again.

In this implementation, when the first cell is incapable of providing the terminal device with the service corresponding to the first slice, the core network device may indicate the central unit to store the information about the session associated with the first slice. In this way, a network side can quickly resume, based on the information of the session, the session associated with the first slice, so that signaling overheads between the terminal device and a network device caused by frequent release and/or establishment of the session associated with the first slice can be reduced, and power consumption of the terminal device can be reduced.

**Implementation a3: The central unit determines, based on indication information #4 from the terminal device, to store the information about the session associated with the first slice.**

In an implementation, Implementation a3 may include step K1 and step K2.

**Step K1:** The terminal device sends the indication information #4 to the central unit, and correspondingly, the central unit receives the indication information #4 from the terminal device. The indication information #4 may indicate to store the information about the session associated with the first slice.

In some possible manners, after determining to establish a radio bearer, suspend the session, and/or store the information about the session, the terminal device may send the indication information #4 to the central unit.

In an implementation, the terminal device may determine, based on third information, to establish the radio bearer, suspend the session, and/or store the information about the session. For specific content of the third information, refer to step E2 in FIG. 5. Details are not described herein again.

In some examples, when determining, based on the third information, that a condition #2 is met, the terminal device may determine to establish the radio bearer, suspend the session, and/or store the session associated with the first slice. For a specific manner in which the terminal device determines, based on the third information, that the condition #2 is met, refer to the descriptions that the core network device determines, based on the third information, that the condition #2 is met in Implementation 2 of step E2 in FIG. 5. Only the core network device is replaced with the terminal device, and details are not described herein again.

In some other examples, when the terminal device perceives that the session is released and determines that a condition #3 is met, the terminal device may determine to establish the radio bearer, suspend the session, and/or store the session associated with the first slice. For specific content of a case in which the terminal device determines that the condition #3 is met, refer to the descriptions of a case in which the core network device determines that the condition #3 is met in Implementation 3 of step E2 in FIG. 5. Only the core network device is replaced with the terminal device, and details are not described herein again.

**Step K2:** The central unit determines, based on the indication information #4, to store the information about the session associated with the first slice.

If receiving the indication information #4, the central unit may determine to store the information about the session associated with the first slice.

In this implementation, when the first cell is incapable of providing the terminal device with the service corresponding to the first slice, the terminal device may indicate the central unit to store the information about the session associated with the first slice. In this way, a network side can quickly resume, based on the information of the session, the session associated with the first slice, so that signaling overheads between the terminal device and a network device caused by frequent release and/or establishment of the session associated with the first slice can be reduced, and power consumption of the terminal device can be reduced.

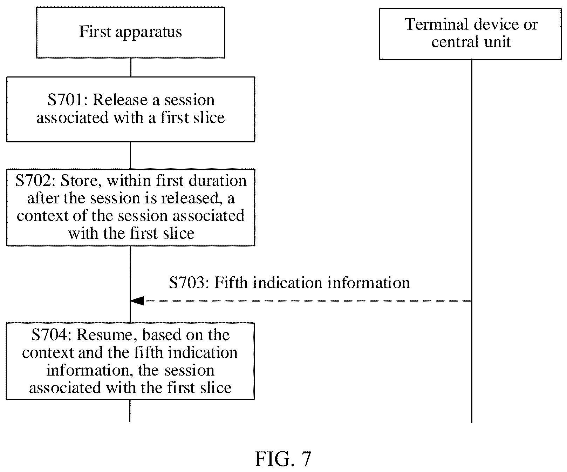

FIG. 7 is a diagram of still another communication method according to an embodiment of this application. The method may be applied to the communication system shown in FIG. 1. The method includes the following steps.

S701: A first apparatus releases a session (for example, a PDU session) associated with a first slice.

The first apparatus may be a central unit or a core network device. The core network device is, for example, an AMF.

In an implementation, a first cell managed by the first apparatus may be a cell (for example, a serving cell of a terminal device) that is providing the terminal device with a service, or may be a cell (for example, a target cell of the terminal device) that is to provide the terminal device with a service.

In some possible manners, the first cell is incapable of providing the terminal device with a service corresponding to the first slice, the first cell is a cell managed by the central unit, and the first cell is within an RA of the terminal device. The first slice belongs to a first slice set. For specific content of the first slice set, refer to S501 in FIG. 5. Details are not described herein again.

In an implementation, in Scenario 1 or Scenario 2 in S501 in FIG. 5, the first apparatus may perform S701. For specific content of Scenario 1 and Scenario 2, refer to S501 in FIG. 5. Details are not described herein again.

S702: The first apparatus stores, within first duration after the session is released, a context of the session associated with the first slice.

The first duration may be defined in a standard, may be set by the first apparatus, or may be obtained by the first apparatus from another device.

In an implementation, for specific content of the context of the session, refer to S601 in FIG. 6. Details are not described herein again.

In this application, releasing the session associated with the first slice may also be referred to as suspending the session associated with the first slice.

According to the method, the first apparatus stores the context of the session within the first duration after the session associated with the first slice is released. In this way, a network side can quickly resume, based on the context of the session, the session associated with the first slice, so that signaling overheads between the terminal device and a network device caused by frequent release and/or establishment of the session associated with the first slice can be reduced, and power consumption of the terminal device can be reduced.

In some possible manners, the method shown in FIG. 7 further includes the following steps.

S703: The first apparatus receives fifth indication information, where the fifth indication information indicates the first apparatus to resume the session associated with the first slice.

In some possible manners, the first apparatus is a central unit, and the first apparatus receives the fifth indication information from the terminal device.

In an implementation, after determining to resume the session associated with the first slice, the terminal device may send the fifth indication information to the first apparatus. For example, when the terminal device moves from the first cell to a third cell, or the first cell used as a serving cell of the terminal device is still capable of providing the terminal device with the service corresponding to the first slice, the terminal device determines to resume the session associated with the first slice. The third cell is capable of providing the terminal device with the service corresponding to the first slice, the third cell is within the RA of the terminal device, and the first slice belongs to the first slice set. The third cell and the foregoing second cell may be a same cell, or may be different cells.

In some examples, when the terminal device moves from the first cell to the third cell, or the first cell used as the serving cell of the terminal device is still capable of providing the terminal device with the service corresponding to the first slice, if the terminal device needs to perform transmission of uplink data, the terminal device may determine to resume the session associated with the first slice.

In this manner, the central unit may quickly resume, based on the context of the session and under the indication of the terminal device, the session associated with the first slice, so that signaling overheads between the terminal device and a network device caused by frequent release and/or establishment of the session associated with the first slice can be reduced, and power consumption of the terminal device can be reduced.

In some other possible manners, the first apparatus is a core network device, and the first apparatus may receive fifth indication information from the terminal device or a central unit.

In some examples, after determining to resume the session associated with the first slice, the terminal device may send the fifth indication information to the first apparatus. For a manner in which the terminal device determines to resume the session associated with the first slice, refer to the foregoing descriptions. Details are not described herein again.

In some other examples, after receiving the fifth indication information from the terminal device, the central unit may send the fifth indication information to the core network device.

In this manner, the core network device can quickly resume, based on the context of the session under the indication of the terminal device or the central unit, the session associated with the first slice, so that signaling overheads between the terminal device and a network device caused by frequent release and/or establishment of the session associated with the first slice can be reduced, and power consumption of the terminal device can be reduced.

In this application, the fifth indication information may be carried in an existing message, or may be carried in a new message. This is not limited in this application.

S704: The first apparatus resumes, based on the context and the fifth indication information, the session associated with the first slice.

According to the method, the first apparatus can quickly resume, based on the context of the session, the session associated with the first slice, so that the signaling overheads between the terminal device and the network device caused by the frequent release and/or establishment of the session associated with the first slice can be reduced, and the power consumption of the terminal device can be reduced.

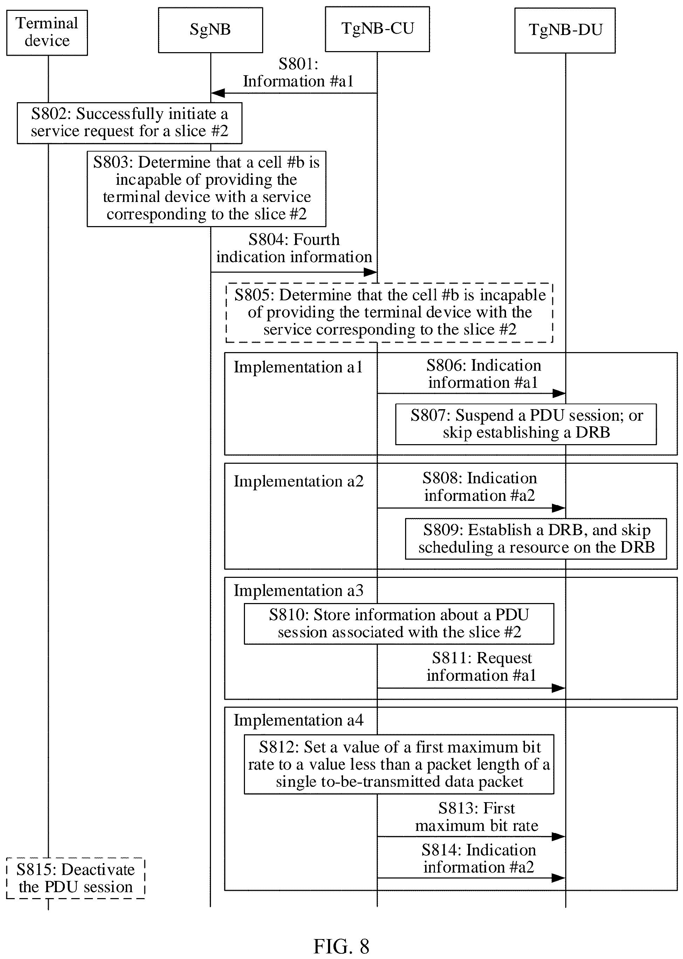

FIG. 8 is a diagram of yet another communication method according to an embodiment of this application. The method shows a possible implementation of the method shown in FIG. 5 or FIG. 6. The method may be applied to the communication system shown in FIG. 1. The following specifically describes a procedure of the method by using an example in which a central unit is a target gNB (target gNB, TgNB)-CU, a distributed unit is a TgNB-DU, and a first access network device is a source gNB (Source gNB, SgNB). The method includes the following steps.

S801: The TgNB-CU sends information #a1 to the SgNB.

The information #a1 may include a slice list supported by at least one cell managed by a TgNB and/or a slice available capacity of the at least one cell. For specific content of the slice list and the slice available capacity, refer to Implementation 2 of step S503 in FIG. 5. Details are not described herein again.

In some examples, the TgNB-CU may actively send the information #a1 to the SgNB. For example, the TgNB-CU may send the information #a1 to the SgNB when establishing a connection to the SgNB. For another example, the TgNB-CU may periodically send the information a1 on an Xn interface, and correspondingly, the SgNB may receive the information #a1 from the TgNB-CU.

In some other examples, the TgNB-CU may send the information #a1 to the SgNB based on a request of the SgNB.

S802: A terminal device accesses a cell #a managed by the SgNB, and successfully initiates a service request for a slice #2. In this case, a user plane of a PDU session established by the SgNB for the slice #2 is in an active state.

In an implementation, for Scenario 1 above, the cell #a is within a TA identified by the TAC #2 shown in FIG. 2; or the cell #a is, for example, the cell #1 shown in FIG. 3, and is within a TA identified by a TAC #1.

An execution sequence of S801 and S802 is not limited in this application.

S803: When determining, based on a measurement report of the terminal device, to hand over the terminal device to a cell #b managed by the TgNB, the SgNB determines that the cell #b is incapable of providing the terminal device with a service corresponding to the slice #2.

If determining that a condition #1 is met, the SgNB determines that the cell #b is incapable of providing the terminal device with the service corresponding to the slice #2. For specific content of a case in which the SgNB determines that the condition #1 is met, refer to the descriptions of a case in which the first access network device determines that the condition #1 is met in step C1 in FIG. 5. Repeated content is not described again.

In an implementation, for Scenario 1 above, as shown in FIG. 2, the cell #b is within the TA identified by the TAC #1, and the TA identified by the TAC #1 supports only the slice #1; or as shown in FIG. 3, the cell #b is the cell #2, and no resource is allocated to the slice #2 in the cell #2. In this case, the SgNB may determine that the cell #b is incapable of providing the terminal device with the service corresponding to the slice #2.

S804: The SgNB sends fourth indication information to the TgNB-CU, where the fourth indication information indicates that the TgNB-CU accepts the PDU session associated with the slice #2.

For specific content of S804, refer to step C1 in FIG. 5. Repeated content is not described again.

In an implementation, when the CU and the DU in the TgNB are not separated, the SgNB may send the fourth indication information to the TgNB.

S805: The TgNB-CU determines that the cell #b is incapable of providing the terminal device with the service corresponding to the slice #2.

For example, the TgNB-CU may determine, based on the information #a1, that the cell #b is incapable of providing the terminal device with the service corresponding to the slice #2. For example, if a slice list supported by the cell #b does not include the slice #2, the TgNB-CU determines that the cell #b is incapable of providing the terminal device with the service corresponding to the slice #2. For another example, if determining, based on a slice available capacity of the cell #b, that no resource is allocated to the slice #2 in the cell #b, the TgNB-CU determines that the cell #b is incapable of providing the terminal device with the service corresponding to the slice #2.

S805 is an optional step. For example, when the TgNB is capable of parsing the fourth indication information, the method shown in FIG. 8 may not include S805. For another example, when the TgNB is incapable of parsing the fourth indication information due to an earlier version, or a handover request message sent by the SgNB to the TgNB does not include the fourth indication information, the method shown in FIG. 8 may include S805.

After S804 or S805, the TgNB-CU and the TgNB-DU may interact with each other in any one of the following Implementation a1 to Implementation a4.

**Implementation a1: The TgNB-CU indicates the TgNB-DU to suspend the PDU session associated with the slice #2.**

Implementation a1 includes S806 and S807.

S806: The TgNB-CU sends indication information #a1 to the TgNB-DU, where the indication information #a1 indicates the TgNB-DU to suspend the PDU session associated with the slice #2.

For specific content of the indication information #a1, refer to the first indication information in S501 in FIG. 5. Details are not described herein again.

S807: The TgNB-DU establishes a DRB corresponding to the PDU session associated with the slice #2, and suspends the PDU session; or the TgNB-DU skips establishing a DRB.

For specific content of suspending the PDU session by the TgNB-DU, refer to Implementation 1 in S503 in FIG. 5. For specific content of skipping establishing the DRB by the TgNB-DU, refer to Implementation 3 of S503 in FIG. 5. Repeated content is not described again.

In an implementation, the TgNB-CU may alternatively suspend the PDU session. For example, after the TgNB-DU establishes the DRB, the TgNB-DU may send, to the TgNB-CU, feedback information indicating that the DRB is successfully established, and then the TgNB-CU may suspend the PDU session. For another example, after the TgNB-DU suspends the PDU session, the TgNB-DU may send, to the TgNB-CU, feedback information indicating that the PDU session is successfully suspended, and then the TgNB-CU may suspend the PDU session.

**Implementation a2: The TgNB-DU skips scheduling a resource on a DRB corresponding to the PDU session associated with the slice #2.**

Implementation a2 includes S808 and S809.

S808: The TgNB-CU sends indication information #a2 to the TgNB-DU, where the indication information #a2 indicates the TgNB-DU to establish the DRB corresponding to the PDU session associated with the slice #2.

For specific content of the indication information #a2, refer to the first indication information in S501 in FIG. 5. Details are not described herein again.

In some possible manners, the TgNB-CU may alternatively send second indication information to the TgNB-DU, where the second indication information indicates the TgNB-DU not to schedule the resource on the DRB.

For specific content of S808, refer to Implementation 2 of S503 in FIG. 5. Repeated content is not described again.

S809: The TgNB-DU establishes the DRB corresponding to the PDU session associated with the slice #2. The TgNB-DU skips scheduling the resource on the DRB.

In some possible manners, the second indication information indicates the TgNB-DU not to schedule the resource on the DRB, and the TgNB-DU skips scheduling the resource on the DRB based on the second indication information.

In some other possible manners, the TgNB-DU determines, based on a slice list supported by the TgNB-DU and/or a slice available capacity of the TgNB-DU, that the TgNB-DU is incapable of scheduling the resource on the DRB. For specific content, refer to Implementation 2 of S503 in FIG. 5. Repeated content is not described again.

Optionally, after determining that the TgNB-DU is incapable of scheduling the resource on the DRB, the TgNB-DU may send third indication information to the TgNB-CU, where the third indication information indicates that the TgNB-DU is incapable of scheduling the resource on the DRB.

In an implementation, after establishing the DRB, the TgNB-DU may send, to the TgNB-CU, feedback information indicating that the DRB is successfully established.

**Implementation a3: The TgNB-CU stores information about the PDU session associated with the slice #2, and skips triggering the TgNB-DU to establish a DRB corresponding to the PDU session.**

Implementation a3 includes S810 and S811.

S810: The TgNB-CU stores the information about the PDU session associated with the slice #2.

The information about the PDU session may include a context of the PDU session. For specific content of the context of the PDU session, refer to the descriptions of the context of the session in S601 in FIG. 6. Only the session is replaced with the PDU session, and details are not described herein again.

In an implementation, the information about the PDU session may be obtained by the TgNB-CU from the SgNB. For example, the information about the PDU session is included in a handover request message sent by the SgNB to the TgNB-CU.

In some possible manners, when the terminal device moves from the cell #b to a cell #c, the TgNB-CU may send the information about the PDU session to an access network device that manages the cell #c. For specific content, refer to S603 in FIG. 6. Repeated content is not described again. For example, the terminal device moves from the cell #b to the cell #c. If the cell #c supports the slice #2, the TgNB-CU may send, through a handover procedure, the information about the PDU session to the access network device that manages the cell #c, to indicate the access network device that manages the cell #c to use the PDU session as a to-be-established session. The access network device that manages the cell #c may determine whether to accept the PDU session. If the access network device that manages the cell #c determines to accept the PDU session, the access network device may quickly establish the PDU session based on the information about the PDU session.

S811: The TgNB-CU sends request information #a1 to the TgNB-DU.

The request information #a1 is for requesting the TgNB-DU to establish a context of the terminal device. In this case, the TgNB-CU does not trigger the TgNB-DU to establish the DRB corresponding to the PDU session. In other words, the TgNB-CU does not send, to the TgNB-DU, information for requesting to establish the DRB.

An execution sequence of S810 and S811 is not limited in this application.

**Implementation a4: The TgNB-CU sets, to a value less than a packet length of a single to-be-transmitted data packet, a value of a first maximum bit rate corresponding to the slice #2.**

Implementation a4 includes S812 to S814.

S812: The TgNB-CU sets, to the value less than the packet length of the single to-be-transmitted data packet, the value of the first maximum bit rate corresponding to the slice #2.

For specific content of S812, refer to step B1 in FIG. 5. Details are not described herein again.

In some possible manners, the TgNB-CU stores a second maximum bit rate corresponding to the slice #2, where the second maximum bit rate is a maximum bit rate that is from a core network device and that corresponds to the slice #2. For specific content of the second maximum bit rate, refer to Implementation 4 of S503 in FIG. 5. Details are not described herein again.

In some possible manners, when the terminal device moves from the cell #b to a cell #c, the TgNB-CU sends the second maximum bit rate to an access network device that manages the cell #c. For example, the terminal device moves from the cell #b to the cell #c. If the cell #c supports the slice #2, the TgNB-CU may send, through a handover procedure, the second maximum bit rate to the access network device that manages the cell #c, to indicate the access network device that manages the cell #c to use the PDU session as a to-be-established session. The access network device that manages the cell #c may determine whether to accept the PDU session.

S813: The TgNB-CU sends the first maximum bit rate to the TgNB-DU.

S814: The TgNB-CU sends indication information #a2 to the TgNB-DU, where the indication information #a2 indicates the TgNB-DU to establish a DRB corresponding to the PDU session associated with the slice #2.

The first maximum bit rate and the indication information #a2 may be included in a same message, or may be included in different messages. When the first maximum bit rate and the indication information #a2 are included in different messages, an execution sequence of S813 and S814 is not limited.

In an implementation, after establishing the DRB, the TgNB-DU may send, to the TgNB-CU, feedback information indicating that the DRB is successfully established.

It should be understood that the foregoing Implementation a1 to Implementation a4 are described by using an inter-station handover scenario as an example. Implementation a1 to Implementation a4 are further applicable to the following scenarios:
Scenario a: Intra-station handover scenario: For example, the TgNB-CU manages the cell #a and the cell #b. In this case, the SgNB in the method shown in FIG. 8 may be replaced with the TgNB-CU, and the method does not include S801, S804, and S805.
Scenario b: A resource allocated in the cell #a to the slice #2 is limited. For specific content of the scenario, refer to Scenario 2 in S501 in FIG. 5. In this case, the cell #a and the cell #b are a same cell; and the SgNB in the method shown in FIG. 8 is the TgNB-CU, and the method does not include S801, S804, and S805. S803 is replaced with the following step: The TgNB-CU determines that a resource allocated in the cell #a to the slice #2 is limited.

In an implementation, the method shown in FIG. 8 further includes the following step.

S815: The terminal device deactivates the PDU session associated with the slice #2.

For specific content of S815, refer to step H1 in FIG. 5. Repeated content is not described again.

In an implementation, after perceiving that the PDU session is suspended on a RAN side, the terminal device may deactivate the PDU session. In this way, the terminal device does not send uplink data via the PDU session.

According to the method shown in FIG. 8, when the terminal device moves from the cell #a to the cell #b, and the cell #b is incapable of providing the terminal device with the service corresponding to the slice #2, the TgNB-CU may determine, under the indication of the SgNB, to suspend the PDU session, so that frequent release and/or establishment of the PDU session associated with the slice #2 can be avoided, thereby reducing signaling overheads between the terminal device and a network device caused by frequent release and/or establishment of the PDU session associated with the slice #2, and reducing power consumption of the terminal device.

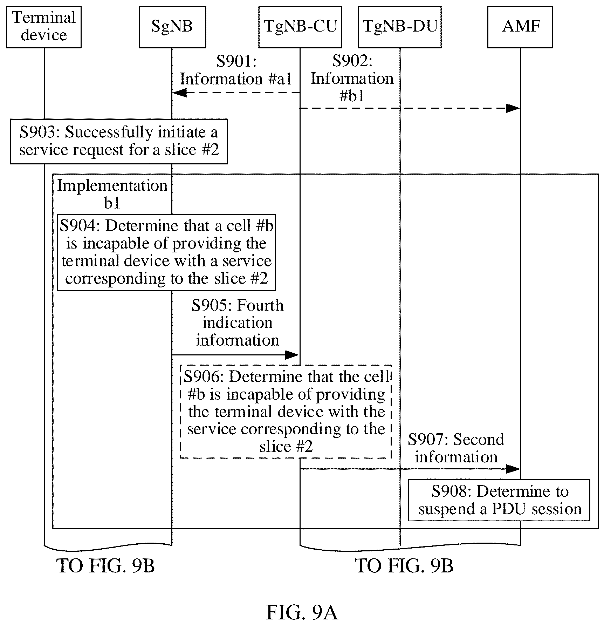

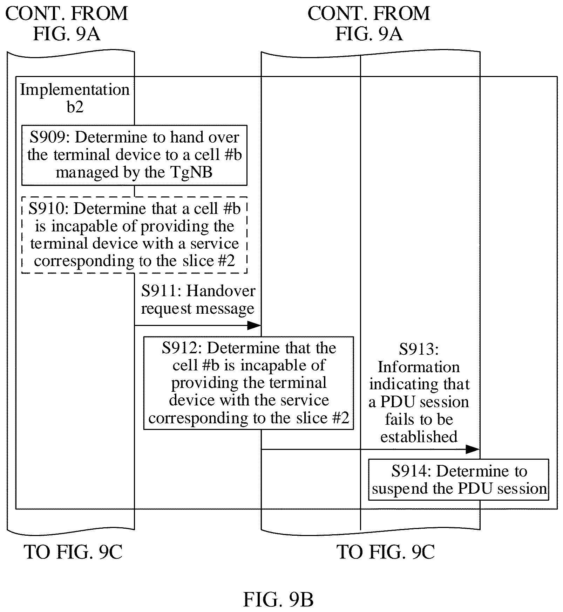

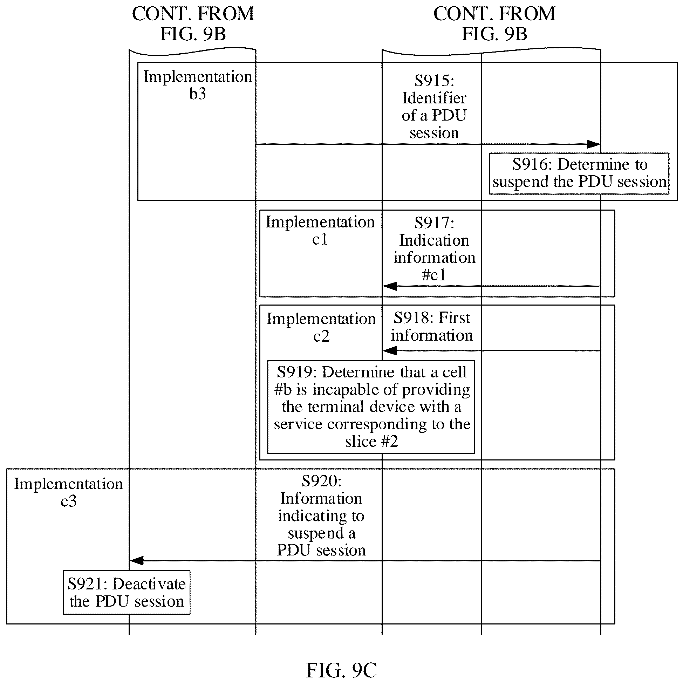

FIG. 9A, FIG. 9B, and FIG. 9C are a diagram of yet another communication method according to an embodiment of this application. The method shows a possible implementation of the method shown in FIG. 5 or FIG. 6. The method may be applied to the communication system shown in FIG. 1. The following specifically describes a procedure of the method by using an example in which a central unit is a TgNB-CU, a distributed unit is a TgNB-DU, a first access network device is a gNB, and a core network device is an AMF. The method includes the following steps.

S901: The TgNB-CU sends information #a1 to the SgNB.

For specific content of S901, refer to S801 in FIG. 8. Details are not described herein again.

S902: The TgNB-CU sends information #b1 to the AMF.

The information #b1 may include a slice list supported by at least one cell managed by the TgNB.

S901 and S902 are optional steps.

S903: A terminal device accesses a cell #a managed by the SgNB, and successfully initiates a service request for a slice #2. In this case, a user plane of a PDU session established by the SgNB for the slice #2 is in an active state.

For specific content of S903, refer to S802 in FIG. 8. Details are not described herein again.

An execution sequence of S901 to S903 is not limited in this application.

After S903, the AMF may determine, in any one of Implementation b1 to Implementation b3, to suspend the PDU session associated with the slice #2.

**Implementation b1: The AMF determines, based on second information from the TgNB-CU, to suspend the PDU session.** The second information may be used by the AMF to determine to suspend the PDU session.

Implementation b1 includes S904 to S908.

S904: When determining, based on a measurement report of the terminal device, to hand over the terminal device to a cell #b managed by the TgNB, the SgNB determines that the cell #b is incapable of providing the terminal device with a service corresponding to the slice #2.

S905: The SgNB sends fourth indication information to the TgNB-CU, where the fourth indication information indicates that the TgNB-CU accepts the PDU session associated with the slice #2.

S906: The TgNB-CU determines that a cell #b is incapable of providing the terminal device with a service corresponding to the slice #2.

For specific content of S904 to S906, refer to S803 to S805 in FIG. 8. Details are not described herein again.

S907: The TgNB-CU sends the second information to the AMF.

For specific content of S907, refer to Implementation 2 of S501 in FIG. 5. Repeated content is not described again.

For example, the following describes possible manners of the second information with reference to Manner a1 to Manner a4:
**Manner a1:** information indicating that the PDU session fails to be established (a failed PDU session), where the information may include indication information (for example, an identifier) of the slice #2.
**Manner a2:** information indicating that the PDU session is successfully admitted (an accepted PDU session), where the information may include indication information (for example, an identifier) of the slice #2.
**Manner a3:** information indicating that the PDU session fails to be established (a failed PDU session), and fourth indication information.
**Manner a4:** information indicating that the PDU session is successfully admitted (an accepted PDU session), and the fourth indication information.

S908: The AMF determines to suspend the PDU session associated with the slice #2.

For specific content of S908, refer to Implementation 1 to Implementation 3 of step E2 in FIG. 5. Details are not described herein again.

**Implementation b2: The AMF determines, based on information that is from the TgNB and that indicates that the PDU session fails to be established, to suspend the PDU session.**

Implementation b2 includes S909 to S914.

S909: The SgNB determines, based on a measurement report of the terminal device, to hand over the terminal device to a cell #b managed by the TgNB.

S910: The SgNB determines that the cell #b is incapable of providing the terminal device with a service corresponding to the slice #2.

For specific content of S910, refer to S803 in FIG. 8. Details are not described herein again.

S910 is an optional step. In other words, after S909, the SgNB may directly perform S911.

S911: The SgNB sends a handover request message to the TgNB-CU, where the handover request message is for requesting to hand over the terminal device from the cell #a managed by the SgNB to the cell #b managed by the TgNB.

S912: The TgNB-CU determines that the cell #b is incapable of providing the terminal device with a service corresponding to the slice #2.

For specific content of S912, refer to S805 in FIG. 8. Details are not described herein again.

S913: The TgNB-CU sends, to the AMF, the information indicating that the PDU session fails to be established.

S914: The AMF determines to suspend the PDU session.

For specific content of S914, refer to Implementation 2 and Implementation 3 of step E2 in FIG. 5. Details are not described herein again.

**Implementation b3: The AMF determines, based on an identifier of the PDU session from the SgNB, to suspend the PDU session.**

Implementation b3 includes S915 and S916.

S915: When the SgNB determines, based on a measurement report of the terminal device, to hand over the terminal device to a cell #b managed by the TgNB, the SgNB sends the identifier of the PDU session to the AMF.

The identifier of the PDU session may be carried in a handover required message.

S916: The AMF determines to suspend the PDU session.

For specific content of S916, refer to Implementation 2 and Implementation 3 of step E2 in FIG. 5. Details are not described herein again.

After determining that the PDU session associated with the slice #2 needs to be suspended, the AMF may indicate, in any one of the following Implementation c1 to Implementation c3, to suspend the PDU session.

**Implementation c1: The AMF directly indicates the TgNB to suspend the PDU session.**

Implementation c1 includes S917.

S917: The AMF sends indication information #c1 to the TgNB-CU, where the indication information #c1 indicates the TgNB-CU to suspend the PDU session.

After S917, the TgNB-CU and the TgNB-DU may interact with each other in any one of Implementation a1 to Implementation a4 in FIG. 8, and the terminal device may deactivate, in the manner of S815 in FIG. 8, the PDU session associated with the slice #2.

**Implementation c2: The AMF sends first information to the TgNB-CU, so that the TgNB-CU determines to suspend the PDU session.**

Implementation c2 includes S918 and S919.

S918: The AMF sends, to the TgNB-CU, the first information used to determine that a first condition is met. The first condition may include: A first slice set includes the slice #2. The first condition is used by the TgNB-CU to determine to establish a DRB and/or suspend the PDU session.

In an implementation, the first information may include at least one of the following: partially allowed NSSAI of the terminal device, rejected NSSAI partially in an RA, or allowed NSSAI of the terminal device.

S919: The TgNB-CU determines that a cell #b is incapable of providing the terminal device with a service corresponding to the slice #2.

For specific content of S918 and S919, refer to Implementation 2 of S501 in FIG. 5. Details are not described herein again.

After S919, the TgNB-CU and the TgNB-DU may interact with each other in any one of Implementation a1 to Implementation a4 in FIG. 8, and the terminal device may deactivate, in the manner of S815 in FIG. 8, the PDU session associated with the slice #2.

**Implementation c3: The AMF indicates the terminal device to suspend the PDU session.**

Implementation c3 includes S920 and S921.

S920: The AMF sends, to the terminal device, information indicating to suspend the PDU session.

S921: The terminal device deactivates the PDU session.

According to the method shown in FIG. 9A, FIG. 9B, and FIG. 9C, when the terminal device moves from the cell #a to a cell #b, and the cell #b is incapable of providing the terminal device with the service corresponding to the slice #2, the TgNB-CU may determine, under the indication of the AMF, to suspend the PDU session, so that frequent release and/or establishment of the PDU session associated with the slice #2 can be avoided, thereby reducing signaling overheads between the terminal device and a network device caused by frequent release and/or establishment of the PDU session associated with the slice #2, and reducing power consumption of the terminal device.

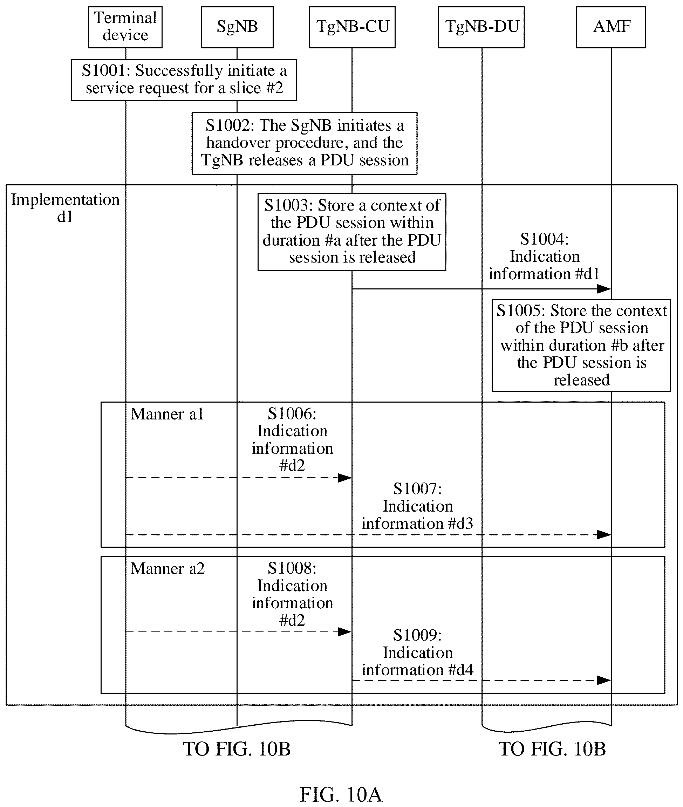

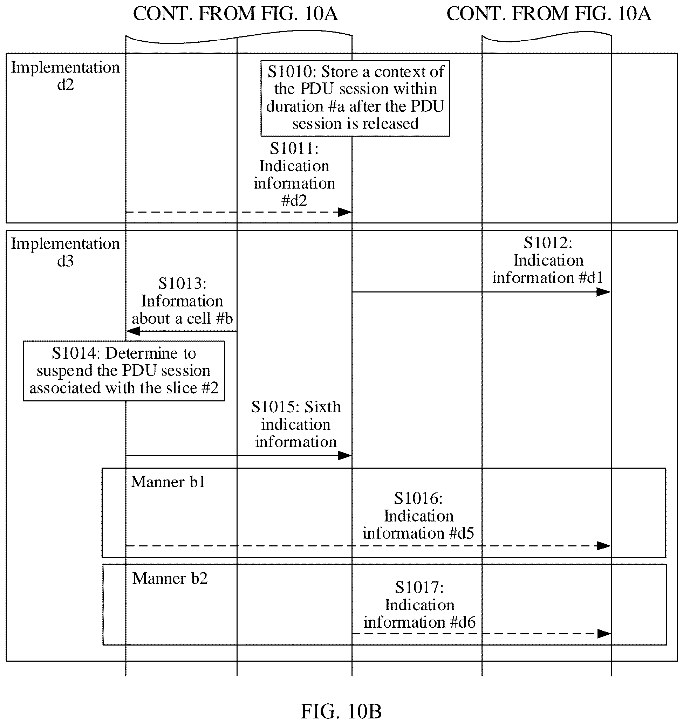

FIG. 10A and FIG. 10B are a diagram of yet another communication method according to an embodiment of this application. The method shows a possible implementation of the method shown in FIG. 5, FIG. 6, or FIG. 7. The method may be applied to the communication system shown in FIG. 1. The following specifically describes a procedure of the method by using an example in which a central unit is a TgNB-CU, a distributed unit is a TgNB-DU, a first access network device is a SgNB, and a core network device is an AMF. The method includes the following steps.

S1001: A terminal device accesses a cell #a managed by the SgNB, and successfully initiates a service request for a slice #2. In this case, a user plane of a PDU session established by the SgNB for the slice #2 is in an active state.

For specific content of S1001, refer to S802 in FIG. 8. Repeated content is not described again.

In an implementation, in a registration process of the terminal device, the terminal device may receive a registration accept message from the AMF. The registration accept message may include at least one of the following: partially allowed NSSAI of the terminal device, rejected NSSAI partially in an RA, allowed NSSAI of the terminal device, information indicating the RA, a TA list in which the partially allowed NSSAI capable or incapable of being supported in the RA, a TA list in which the rejected NSSAI partially in the RA capable or incapable of being supported in the RA, service area information of the allowed NSSAI capable or incapable of being supported in the RA, service area information of the partially allowed NSSAI capable or incapable of being supported in the RA, or service area information of the rejected NSSAI partially in the RA capable or incapable of being supported in the RA.

For example, a cell in a TAC #2 in the RA is capable of supporting the slice #2, or a service area that is capable of supporting the slice #2 in the RA includes a cell #1, a cell #3, and a cell #4.

In an implementation, for Scenario 1 above, the cell #a is within a TA identified by the TAC #2 shown in FIG. 2; or the cell #a is, for example, the cell #1 shown in FIG. 3, and is within a TA identified by a TAC #1.

S1002: When determining, based on a measurement report of the terminal device, to hand over the terminal device to a cell #b managed by the TgNB, the SgNB may initiate a handover procedure. Because the cell #b is incapable of providing the terminal device with a service corresponding to the slice #2, the TgNB refuses to accept the PDU session associated with the slice #2, and releases the PDU session.

After S1002, the method shown in FIG. 10A and FIG. 10B may include any one of the following implementation d1 to implementation d3:

**Implementation d1: The TgNB and the AMF store a context of the PDU session within a period of time after the PDU session is released.** For specific content of the context of the PDU session, refer to the context of the session in S601 in FIG. 6. Only the session is replaced with the PDU session, and details are not described herein again.

Implementation d1 may include S1003 to S1005:
S1003: The TgNB-CU stores the context of the PDU session within duration #a after the PDU session is released.
S1004: The TgNB-CU sends indication information #d1 to the AMF. The indication information #d1 indicates the AMF to release the PDU session associated with the slice #2.
S1005: The AMF releases the PDU session, and stores the context of the PDU session within duration #b after the PDU session is released.

For specific content of the duration #a and the duration #b, refer to the first duration in S702 in FIG. 7. The duration #a and the duration #b may be the same or may be different.

An execution sequence of S1003, S1004, and S1005 is not limited in this application.

In an implementation, in Implementation d1, the session associated with the slice #2 may be further indicated in the following manner a1 or manner a2 for resumption.

Manner a1: The terminal device separately indicates the TgNB-CU and the AMF to resume the PDU session associated with the slice #2.

Manner a1 includes S1006 and S1007.

S1006: The terminal device sends indication information #d2 to the TgNB-CU, where the indication information #d2 indicates the TgNB-CU to resume the PDU session associated with the slice #2.

In an implementation, after determining to resume the PDU session associated with the slice #2, the terminal device may send the indication information #d2 to the TgNB-CU. For specific content of a case in which the terminal device determines to resume the PDU session associated with the slice #2, refer to S703 in FIG. 7. Details are not described herein again.

The indication information #d2 may be carried in a radio resource control (radio resource control, RRC) message.

S1007: The terminal device sends indication information #d3 to the AMF, where the indication information #d3 indicates the AMF to resume the PDU session associated with the slice #2.

In an implementation, after determining to resume the PDU session associated with the slice #2, the terminal device may send the indication information #d3 to the AMF. For specific content of a case in which the terminal device determines to resume the PDU session associated with the slice #2, refer to S703 in FIG. 7. Details are not described herein again.

The indication information #d3 may be carried in a non-access stratum (Non-Access Stratum, NAS) message.

An execution sequence of S1006 and S1007 is not limited in this application.

Manner a2: The terminal device indicates the TgNB-CU to resume the PDU session associated with the slice #2, and the TgNB-CU then indicates the AMF to resume the PDU session associated with the slice #2.

Manner a2 may include S1008 and S1009.

S1008: The terminal device sends indication information #d2 to the TgNB-CU, where the indication information #d2 indicates the TgNB-CU to resume the PDU session associated with the slice #2.

For specific content of S1008, refer to S1006 in FIG. 10A and FIG. 10B. Details are not described herein again.

S1009: The TgNB-CU sends indication information #d4 to the AMF, where the indication information #d4 indicates the AMF to resume the PDU session associated with the slice #2.

The indication information #d4 may be carried in an NG message.

**Implementation d2: The TgNB stores a context of the PDU session within a period of time after the PDU session is released.** For specific content of the context of the PDU session, refer to the context of the session in S601 in FIG. 6. Only the session is replaced with the PDU session, and details are not described herein again.

Implementation d2 may include S1010:
S1010: The TgNB-CU stores the context of the PDU session within duration #a after the PDU session is released.

For specific content of the duration #a, refer to the first duration in S702 in FIG. 7.

In an implementation, Implementation d2 further includes S1011:
S1011: The terminal device sends indication information #d2 to the TgNB-CU, where the indication information #d2 indicates the TgNB-CU to resume the PDU session associated with the slice #2.

For specific content of S1011, refer to S1006 in FIG. 10A and FIG. 10B. Details are not described herein again.

**Implementation d3: The terminal device indicates to suspend the PDU session associated with the slice #2.**

Implementation d3 may include S1012 to S1015.

S1012: The TgNB-CU sends indication information #d1 to the AMF. The indication information #d1 indicates the AMF to release the PDU session associated with the slice #2. Then, the AMF may release the PDU session.

S1013: The SgNB sends information about the cell #b to the terminal device.

The information about the cell #b includes, for example, an identifier of the cell #b. The information about the cell #b may be carried in an RRC message (for example, an RRC reconfiguration message).

An execution sequence of S1012 and S1013 is not limited in this application.

S1014: The terminal device determines to suspend the PDU session associated with the slice #2.

For specific content of S1014, refer to Implementation 3 of S501 in FIG. 5. Details are not described herein again.

S1015: The terminal device sends sixth indication information to the TgNB-CU, where the sixth indication information may indicate to establish a DRB of the PDU session and suspend the PDU session.

For specific content of S1015, refer to step G1 in FIG. 5. Repeated content is not described again.

The sixth indication information may be carried in an RRC message.

After S1015, the TgNB-CU and the TgNB-DU may interact with each other in any one of Implementation a1 to Implementation a4 in FIG. 8, and the terminal device may deactivate the PDU session associated with the slice #2.

In an implementation, in Implementation d3, the AMF may be further indicated in the following manner b1 or manner b2 to establish the DRB of the PDU session and suspend the PDU session.

Manner b1 includes S1016:

S1016: The terminal device sends indication information #d5 to the AMF, where the indication information #d5 may indicate to establish the DRB of the PDU session and suspend the PDU session. Then, the AMF may establish the DRB of the PDU session and suspend the PDU session.

The indication information #d5 may be carried in a NAS message.

An execution sequence of S1015 and S1016 is not limited in this application.

Manner b2 includes S1017:
S1017: The TgNB-CU sends indication information #d6 to the AMF, where the indication information #d6 may indicate to establish the DRB of the PDU session and suspend the PDU session. Then, the AMF may establish the DRB of the PDU session and suspend the PDU session.

The indication information #d6 may be carried in an NG message.

According to Implementations d1 and d2 in the method shown in FIG. 10A and FIG. 10B, when the terminal device moves from the cell #a to the cell #b, and the cell #b is incapable of providing the terminal device with the service corresponding to the slice #2, the TgNB-CU may store the context of the PDU session after the TgNB-CU releases the PDU session. Then, the TgNB-CU quickly resumes the PDU session under the indication of the terminal device, to reduce signaling overheads between the terminal device and a network device caused by frequent release and/or establishment of the PDU session associated with the slice #2, and reduce power consumption of the terminal device.

According to Implementation d3 in the method shown in FIG. 10A and FIG. 10B, when the terminal device moves from the cell #a to the cell #b, and the cell #b is incapable of providing the terminal device with the service corresponding to the slice #2, the TgNB-CU may determine, under the indication of the terminal device, to suspend the PDU session, so that frequent release and/or establishment of the PDU session associated with the slice #2 can be avoided, thereby reducing signaling overheads between the terminal device and a network device caused by frequent release and/or establishment of the PDU session associated with the slice #2, and reducing power consumption of the terminal device.

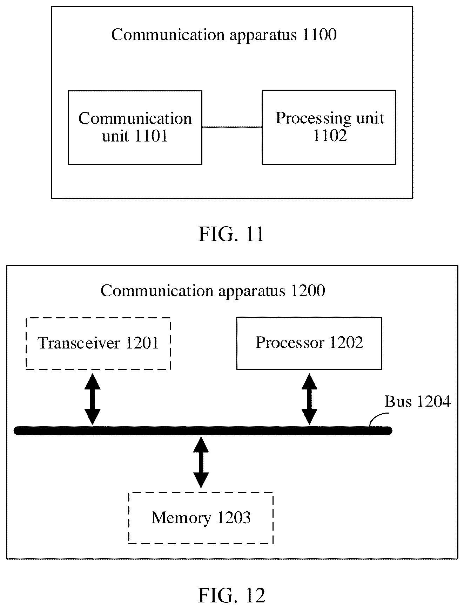

Based on a same technical concept as the method embodiments in FIG. 5 to FIG. 10A and FIG. 10B, an embodiment of this application provides a communication apparatus in FIG. 11. The communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 11, and includes a communication unit 1101 and a processing unit 1102. The communication apparatus 1100 may be used in the terminal device, the access network device, or the core network device in the communication system shown in FIG. 1, and may implement the communication methods provided in the foregoing embodiments and examples of this application. The following describes functions of the units in the communication apparatus 1100.

The communication unit 1101 is configured to: receive and send data. In some manners, the communication unit 1101 may be implemented by using a physical interface, a communication module, a communication interface, or an input/output interface. The communication apparatus 1100 may be connected to a network cable or a cable via the communication unit, to establish a physical connection to another device. In some other manners, the communication unit 1101 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1102 may be configured to support the communication apparatus 1100 in performing processing actions in the foregoing method embodiments. The processing unit 1102 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

For a specific function of the processing unit 1102, refer to the descriptions in the communication methods provided in the foregoing embodiments and examples of this application. Details are not described herein again.

It should be noted that, in the foregoing embodiments of this application, module division is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to a conventional technology, or all or some of the technical solutions may be implemented in form of a software product. The computer software product is stored in a storage medium and includes several instructions for indicating a computer device (which may be a personal computer, a server, a network device) or a processor (processor) to perform all or some of the steps in the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus in FIG. 12. The communication apparatus may be configured to perform related steps in the foregoing method embodiments. The communication apparatus may be used in the terminal device, the access network device, or the core network device in the communication system shown in FIG. 1, may implement the communication methods provided in the foregoing embodiments and examples of this application, and has the functions of the communication apparatus shown in FIG. 11. Refer to FIG. 12. The communication apparatus 1200 includes a processor 1202. In an implementation, the communication apparatus 1200 further includes a transceiver 1201 and a memory 1203. The transceiver 1201, the processor 1202, and the memory 1203 are connected to each other.

In an implementation, the transceiver 1201, the processor 1202, and the memory 1203 are connected to each other by using a bus 1204. The bus 1204 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 12, but this does not mean that there is only one bus or only one type of bus.

The transceiver 1201 is configured to: receive and send data, to implement communication interaction with another device. For example, the transceiver 1201 may be implemented by using a physical interface, a communication module, a communication interface, and an input/output interface.

The processor 1202 may be configured to support the communication apparatus 1200 in performing processing actions in the foregoing method embodiments. When the communication apparatus 1200 is configured to implement the foregoing method embodiments, the processor 1202 may be further configured to implement a function of the processing unit 1102. The processor 1202 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

For a specific function of the processor 1202, refer to the descriptions in the communication methods provided in the foregoing embodiments and examples of this application. Details are not described herein again.

The memory 1203 is configured to store program instructions, data, and/or the like. Specifically, the program instructions may include program code, and the program code includes computer operation instructions. The memory 1203 may include a RAM, and may further include a non-volatile memory (non-volatile memory), for example, at least one magnetic disk storage. The processor 1202 executes the program instructions stored in the memory 1203, and implements the foregoing function by using the data stored in the memory 1203, to implement the communication methods provided in the foregoing embodiments of this application. The memory 1203 may be integrated with the processor 1202, or may be a memory outside the communication apparatus.

It may be understood that the memory 1203 in FIG. 12 of this application may be a volatile memory or a non-volatile memory, or may include both the volatile memory and the non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. By way of example, and not limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these memories and any memory of another appropriate type.

Based on the foregoing embodiments, an embodiment of this application further provides a computer program. When the computer program is run on a computer, the computer is caused to perform the methods provided in the foregoing embodiments.

Based on the foregoing embodiments, an embodiment of this application further provides a computer program product including computer-executable instructions. When the computer program product is run, the methods provided in the foregoing embodiments are performed.

Based on the foregoing embodiments, an embodiment of this application further provides a computer-readable storage medium. The computer-readable storage medium stores a computer program. When the computer program is executed by a computer, the computer is caused to perform the methods provided in the foregoing embodiments.

The storage medium may be any usable medium that can be accessed by the computer. By way of example, and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of instructions or a data structure and that can be accessed by the computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory. The memory is configured to store a program and data that are necessary for the computer apparatus. The chip system may include a chip, or may include the chip and another discrete device.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

A person skilled in the art should understand that embodiments of this application may be provided as a method, a system, or a computer program product. Therefore, this application may use a form of hardware-only embodiments, software-only embodiments, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the methods, the devices (systems), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that may indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the protection scope of this application. In this way, if these modifications and variations to this application fall within the scope of the claims of this application and their equivalent technologies, this application is also intended to cover these modifications and variations.

## Claims

1. A communication method, wherein the method is applied to a central unit, and comprises:
determining to establish a radio bearer corresponding to a session associated with a first slice and/or suspend the session, wherein a first cell is incapable of providing a terminal device with a service corresponding to the first slice, the first cell is a cell managed by the central unit, and is within a registration area of the terminal device, the first slice belongs to a first slice set, and the first slice set comprises a slice allowed within all or a part of areas in the registration area for usage and/or a slice rejected within a part of areas in the registration area for usage; and
sending first indication information to a distributed unit, wherein the first indication information indicates the distributed unit to establish the radio bearer, and/or indicates the distributed unit to suspend the session.

2. The method according to claim 1, wherein determining to establish the radio bearer corresponding to the session associated with the first slice and/or suspend the session comprises:
when the terminal device moves from a second cell to the first cell, or a resource allocated in the first cell for the first slice is limited, determining to establish the radio bearer and/or suspend the session, wherein the second cell is capable of providing the terminal device with the service corresponding to the first slice, and is within the registration area.

3. The method according to claim 1 or 2, further comprising:
suspending the session, wherein the suspending the session comprises: removing a transport network layer association TNLA associated with the session.

4. The method according to claim 3, further comprising:
receiving first feedback information from the distributed unit, wherein the first feedback information indicates that the distributed unit successfully establishes the radio bearer, and/or indicates that the distributed unit successfully suspends the session.

5. The method according to any one of claims 1 to 4, wherein determining to establish the radio bearer corresponding to the session associated with the first slice and/or suspend the session comprises:
when the terminal device moves from the second cell to the first cell, receiving fourth indication information from a first access network device that manages the second cell, wherein the fourth indication information indicates that the central unit accepts the session, and the second cell is capable of providing the terminal device with the service corresponding to the first slice, and is within the registration area; and
determining, based on the fourth indication information, to establish the radio bearer and/or suspend the session.

6. The method according to any one of claims 1 to 4, wherein determining to establish the radio bearer corresponding to the session associated with the first slice and/or suspend the session comprises:
receiving first information from a core network device, wherein the first information is used by the central unit to determine to establish the radio bearer and/or suspend the session; and
determining, based on the first information, to establish the radio bearer and/or suspend the session.

7. The method according to claim 6, wherein the first information indicates the central unit to establish the radio bearer and/or suspend the session.

8. The method according to claim 6, wherein the first information is used to determine that a first condition is met, the first condition comprises: the first slice set comprises the first slice, and the first condition is used by the central unit to determine to establish the radio bearer and/or suspend the session.

9. The method according to any one of claims 6 to 8, further comprising:
sending second information to the core network device, wherein the second information is used by the core network device to determine to establish the radio bearer and/or suspend the session.

10. The method according to claim 9, wherein the second information comprises one of the following:
information indicating that the session fails to be established; and
information indicating that the session is successfully admitted.

11. The method according to claim 10, wherein the second information further comprises fourth indication information, and the fourth indication information indicates that the central unit accepts the session.

12. A communication method, wherein the method is applied to a core network device, and comprises:
determining to establish a radio bearer corresponding to a session associated with a first slice and/or suspend the session, wherein a first cell is incapable of providing a terminal device with a service corresponding to the first slice, the first cell is a cell managed by a central unit, and is within a registration area of the terminal device, the first slice belongs to a first slice set, and the first slice set comprises a slice allowed within all or a part of areas in the registration area for usage and/or a slice rejected within a part of areas in the registration area for usage; and
sending first information to the central unit, wherein the first information is used by the central unit to determine to establish the radio bearer and/or suspend the session.

13. The method according to claim 12, wherein determining to establish the radio bearer corresponding to the session associated with the first slice and/or suspend the session comprises:
when the terminal device moves from a second cell to the first cell, or a resource allocated in the first cell for the first slice is limited, determining to establish the radio bearer and/or suspend the session, wherein the second cell is capable of providing the terminal device with the service corresponding to the first slice, and is within the registration area.

14. The method according to claim 12 or 13, wherein the first information indicates the central unit to establish the radio bearer and/or suspend the session.

15. The method according to claim 12 or 13, wherein the first information is used to determine that a first condition is met, the first condition comprises: the first slice set comprises the first slice, and the first condition is used by the central unit to determine to establish the radio bearer and/or suspend the session.

16. The method according to any one of claims 12 to 15, further comprising:
receiving second information from the central unit, wherein the second information is used by the core network device to determine to establish the radio bearer and/or suspend the session.

17. The method according to claim 16, wherein the second information comprises one of the following:
information indicating that the session fails to be established; and
information indicating that the session is successfully admitted.

18. The method according to claim 17, wherein the second information further comprises fourth indication information, and the fourth indication information indicates that the central unit accepts the session.

19. The method according to claim 18, wherein determining to establish the radio bearer corresponding to the session associated with the first slice and/or suspend the session comprises:
determining, based on the fourth indication information, to establish the radio bearer and/or suspend the session.

20. The method according to any one of claims 12 to 18, wherein determining to establish the radio bearer corresponding to the session associated with the first slice and/or suspend the session comprises:
determining, based on third information, to establish the radio bearer and/or suspend the session, wherein the third information is used to determine that the first cell is incapable of providing the terminal device with the service corresponding to the first slice, the first cell is within the registration area, and the first slice set comprises the first slice.

21. The method according to claim 20, wherein the third information comprises at least one of the following:
partially allowed network slice selection assistance information NSSAI of the terminal device, rejected NSSAI partially in the registration area, allowed NSSAI of the terminal device, information indicating the registration area, a tracking area TA list in which the partially allowed NSSAI is capable or incapable of being supported in the registration area, a TA list in which the rejected NSSAI partially in the registration area is capable or incapable of being supported in the registration area, service area information of the partially allowed NSSAI capable or incapable of being supported in the registration area, service area information of the allowed NSSAI capable or incapable of being supported in the registration area, service area information of the rejected NSSAI partially in the registration area capable or incapable of being supported in the registration area, a cell identity of the first cell, or a TA to which the first cell belongs.

22. The method according to claim 17 or 18, wherein the second information comprises information indicating that the session fails to be established, and determining to establish the radio bearer corresponding to the session associated with the first slice and/or suspend the session comprises:
if determining that a status of the session within the second cell is an active state, and the first slice belongs to the first slice set or both the first cell and the second cell are within the registration area, determining to establish the radio bearer and/or suspend the session, wherein the second cell is a cell that provides the terminal device with the service before the core network device determines to establish the radio bearer and/or suspend the session.

23. A communication method, wherein the method is applied to a first apparatus, and comprises:
releasing a session associated with a first slice; and
storing a context of the session within first duration after the session is released.

24. The method according to claim 23, further comprising:
receiving fifth indication information, wherein the fifth indication information indicates the first apparatus to resume the session; and
resuming the session based on the context and the fifth indication information.

25. The method according to claim 24, wherein the first apparatus is a central unit, and receiving the fifth indication information comprises:
receiving the fifth indication information from a terminal device.

26. The method according to claim 24, wherein the first apparatus is a core network device, and receiving the fifth indication information comprises:
receiving the fifth indication information from a terminal device or a central unit.

27. A communication apparatus, comprising:
a communication unit, configured to: receive and/or send information; and
a processing unit, configured to perform the method according to any one of claims 1 to 26 via the communication unit.

28. A communication apparatus, comprising a processor, wherein the processor is coupled to a memory storing instructions; and when the instructions are executed by the processor, the communication apparatus is caused to perform the method according to any one of claims 1 to 26.

29. A computer-readable storage medium, wherein the computer-readable storage medium stores a computer program; and when the computer program is run on a computer, the method according to any one of claims 1 to 26 is performed.

30. A chip, wherein the chip is coupled to a memory, and the chip reads a computer program stored in the memory, to cause the method according to any one of claims 1 to 26 to be performed.
